# EUROPEAN PATENT SPECIFICATION

(11) **EP 0 557 368 B1**
(45) Date of publication and mention of the grant of the patent: **28.09.1994**
(21) Application number: 91920144.2
(22) Date of filing: 12.11.1991
(51) Int. Cl.: C04B 14/34, C04B 18/14

(54) **MAGNETIC CEMENT-BOUND BODIES**
MAGNETISCHE ZEMENTGEBUNDENE KÖRPER
CORPS MAGNETIQUES A AGGLUTINATION DE CIMENT

(30) Priority: 14.11.1990 DK 2719/90
(43) Date of publication of application: 01.09.1993
(73) Proprietor: Aalborg Portland A/S, 9100 Aalborg (DK)
(72) Inventor: BACHE, Hans, Henrik, DK-9320 Hjallerup (DK); ERIKSEN, Knud, Lund, DK-9400 Norresundby (DK)
(74) Representative: Salka, Jeffrey
(86) International application number: DK9100339
(87) International publication number: WO9208678

(56) References cited:
- EP-A- 0 010 777
- DE-A- 2 117 738
- Dialog Information Service, File 351, World Patent Index 81-91, Dialog accesion no. 88-002616/01, DENKI KAGAKU KOGYO KK, "Cement compsn. for mfr. of hardened prod. with high bending stregth -contains aluminia cement, silica dust superfine powder, water-reducing agent, setting adjuster, metal particles and water" JP 62265159, A, 871118, 8801 (Basic)

## Description

### FIELD OF THE INVENTION

The present invention relates to castable and curable cement-based powder compositions, to cement-bound bodies having magnetic or magnetizable properties produced from such compositions, and to methods of producing such bodies.

### BACKGROUND OF THE INVENTION

A class of extremely dense and strong cement-based materials, the so-called "DSP materials", are based on binder matrix comprising ultrafine particles such as microsilica particles homogeneously arranged between densely packed particles which are exclusively or predominantly cement particles. The dense and homogeneous structure is made possible by the use of an effective amount of a suitable dispersing agent such as a concrete superplasticizer. In typical DSP materials, the binder is made from Portland cement and 10-40% by volume of ultrafine silica dust (based on the total volume of the cement and the silica dust) having an average particle size of about 0.1 µm, using 1-4% by weight of concrete superplasticizer, calculated as dry matter based on the combined weight of the cement and the silica dust, the ratio between the amount of water used in the preparation of the binder and the combined amount of the cement and the silica dust being kept low to secure the dense structure. The DSP materials possess a number of desired qualities, such as high strength, high density (= very small porosity), and high durability, including high frost resistance.

A number of further developments in the field of DSP materials have been reported. Thus, e.g., JP 50659/1986 discloses cement-based materials comprising metal particles of a size of 1-100 µm which may replace up to 95% of the cement.

### BRIEF DESCRIPTION OF THE INVENTION

It has now been found that it is possible to prepare extremely strong and dense magnetic or magnetizable cement-bound bodies which are suitable for use in, e.g., electric motors using cement-based powder compositions which comprise a large amount of magnetic or magnetizable particulate material, a relatively small amount of cement particles, ultrafine particles of an inorganic material, and a surface-active dispersing agent.

Thus, a first aspect of the present invention relates to a castable and curable cement-based powder composition comprising:
i) particles of a magnetic or magnetizable particulate material, and
ii) a subcomposition including:
   cement particles,
   ultrafine particles of an inorganic material, said ultrafine particles having an average particle size in the range of 0.002-2 µm, and
   a surface-active dispersing agent in an amount of 0.1-4% by weight dispersing agent based on the total weight of said cement particles and said ultrafine particles,
said ultrafine particles constituting 3-30% by volume of said powder composition,
said cement particles constituting 2-70% by volume of said powder composition,
said particles of said magnetic or magnetizable particulate material constituting 10-95% by volume, preferably 30-95% by volume of said powder composition, and
said particles of said subcomposition having an average particle size of at the most 10 µm.

A second aspect of the invention relates to a method of producing a body having magnetic properties or being magnetizable comprising the following steps:
providing a volume D of a castable and curable cement-based powder composition comprising:
i) particles of a magnetic or magnetizable particulate material, and
ii) a subcomposition including:
   cement particles,
   ultrafine particles of an inorganic material, said ultrafine particles having an average particle size in the range of 0.002-2 µm, and
   a surface-active dispersing agent in an amount of 0.1-4% by weight dispersing agent dry matter based on the total weight of said cement particles and said ultrafine particles,
said ultrafine particles constituting 3-30% by volume of said powder composition,
said cement particles constituting 2-70% by volume of said powder composition,
said particles of said magnetic or magnetizable particulate material constituting 10-95%, preferably 30-95% by volume of said powder composition, and
said particles of said subcomposition having an average particle size of at the most 10 µm,
providing a volume E of water, said volume D of said castable and curable cement-based powder composition and said volume E of water fulfilling the requirement that the ratio between the weight of said volume E and the weight of said cement particles and said ultrafine particles in said volume D is at the most 0.35,
mechanically mixing said particles of said magnetic or magnetizable particulate material, said subcomposition and said water so as to obtain a homogeneous, viscous to plastic mass in which the volume concentration of said particles of said magnetic or magnetizable particulate material, said cement particles and said ultrafine particles is not less than 0.55,
arranging said mass in a mould, and
allowing said mass to solidify to at least such an extent that said solidified mass constituting said body may be removed from said mould.

A third aspect of the invention relates to bodies prepared by the above method and using the above powder composition. This aspect of the invention thus relates to a body having magnetic properties or being magnetizable, and being cast from a castable and curable cement-based powder composition comprising:
i) particles of a magnetic or magnetizable particulate material, and
ii) a subcomposition including:
   cement particles,
   ultrafine particles of an inorganic material, said ultrafine particles having an average particle size in the range of 0.002-2 µm, and
   a surface-active dispersing agent in an amount of 0.1-4% by weight dispersing agent dry matter based on the total weight of said cement particles and said ultrafine particles,
said ultrafine particles constituting 3-30% by volume of said powder composition and of said body,
said cement particles constituting 2-70% by volume of said powder composition and of said body,
said particles of said magnetic or magnetizable particulate material constituting 10-95%, preferably 30-95% by volume of said powder composition and of said body,
said particles of said subcomposition having an average particle size of at the most 10 µm, and
the volume concentration of said particles of said magnetic or magnetizable particulate material, said cement particles and said ultrafine particles being no less than 0.55 throughout said body.

In accordance with further aspects of the invention, bodies of a magnetic or magnetizable material may be glued together using a cement-based powder composition comprising fine cement particles. Thus, in accordance with a fourth aspect of the invention, a method of producing a body having magnetic properties or being magnetizable is provided, comprising the following steps:
providing a plurality of bodies of a magnetic or magnetizable material,
providing a volume D of a castable and curable cement-based powder composition comprising:
cement particles,
a surface-active dispersing agent in an amount of 0.1-4% by weight dispersing agent dry matter based on the total weight of said cement particles and said ultrafine particles,
said cement particles of said powder composition having an average particle size of at the most 10 µm,
providing a volume E of water, said volume D of said castable and curable cement-based powder composition and said volume E of water fulfilling the requirement that the ratio between the weight of said volume E and the weight of said cement particles in said volume D is at the most 0.35,
mechanically mixing said powder composition and said water so as to obtain a homogeneous, viscous to plastic mass in which the volume concentration of said cement particles is not less than 0.55,
arranging said mass between and optionally around said bodies of said magnetic or magnetizable material so as to glue said bodies together by means of said mass, and
allowing said mass to solidify.

A fifth aspect of the invention relates to a body having magnetic properties or being magnetizable, and including bodies of a magnetic or magnetizable material, which bodies are glued together by means of a solidified mass made from a castable and curable cement-based powder composition including:
cement particles,
a surface-active dispersing agent in an amount of 0.1-4% by weight dispersing agent dry matter based on the total weight of said cement particles and said ultrafine particles,
said cement particles of said subcomposition having an average particle size of at the most 10 µm, and
the volume concentration of said particles of said cement particles being no less than 0.55 throughout said solidified mass.

### DETAILED DESCRIPTION OF THE INVENTION

The term "body" as used in the context of the present invention may refer to both an independent body or to a part of a larger body, the body being, e.g., in the form of a plate, a rod, a sheet or foil, a sphere, cube or other geometrical form, a laminate, etc. It will be understood that the term "body" is not to be construed as being limited to any particular shape, and that the term therefore also encompasses any type of irregularly shaped object prepared in accordance with the teachings of the present invention.

The term "particle" as used in the context of the present invention is to be understood in the broad sense as referring not only to compact shaped particles having a more or less spherical form, but also to, e.g., angular particles, flattened or flake-shaped particles, fibres or fibrous particles, etc. It is to be understood that the "size" of the particles in the context of the present invention refers to the smallest transverse dimension of the particles in question, e.g. in the case of fibrous particles to the diameter.

The particles of the magnetic or magnetizable particulate material are typically particles with soft magnetic properties, e.g. particles selected from the group consisting of high-purity iron; commercial-purity iron; Armature M-43; Electric M-36; Dyname M-22; Transformer 58, M-15; oriented cube-on-edge texture, M-4; High-permeability G.O.; low-aluminium iron (3.5%); 16% Al-Fe; Sendust; Thermoperm; 45 Permalloy; 50-50 Ni-Fe; Mumetal; 78 Permalloy; Supermalloy; 27% Co-Fe; 50% Co-Fe; Supermendur; 45-25 Perminvar; 2-81 Moly permalloy powder; carbonyl iron powder; Mn-Zn Ferrite; Ni-Zn Ferrite; and amorphous Fe-B-S1, METGLAS 2605S-2. They may alternatively or additionally include particles with permanent magnetic properties, e.g. particles selected from the group consisting of Ba ferrite; Sr ferrite; Alnico 5; Alnico 8; Alnico 9; Fe₆₅Cr₃₂Co₃; Fe₆₃Cr₂₅Co₁₂; Co₅Sm; (Co, Fe, Cu, Zr)₈Sm; elongated single domain (ESD) Fe-Co; Mn-Al-C; Co-Pt; and Fe-Nd-B.

By the term "average size" is meant the particle size which is larger than 50% by volume of the particles and smaller than 50% by volume of the particles in a given particle composition. This is thus equal to the 50th percentile (by volume). The grain size distribution of certain particle compositions are defined below by ratios such as "D₉₀/D₁₀" and "D₁₀/D₅", in which, unless otherwise mentioned, e.g., "D₉₀" is the diameter of the 90th percentile (by volume) of the particles and "D₁₀" is the diameter of the 10th percentile (by volume) of the particles. In other words, "D₉₀" represents a particle size which is larger than 90% by volume of the particles in a given particle composition and smaller than 10% by volume of the particles, while "D₁₀" represents a particle size which is larger than 10% by volume of the particles in the given particle composition and smaller than 90% by volume of the particles.

Examples of types of ultrafine particles of an inorganic material which may be used are alumina, calcium carbonate, calcium hydroxide, rice husk ash, metakaolin, oxides such as Al₂O₃, SiO₂, zirconium oxide and titanium oxide, and ground and/or sieved fly ash, quartz and slag. One important example of the ultrafine particles is "microsilica", that is, silica-rich ultrafine dust obtained as by-product in the production of ferrosilicon or silicon metal.

The cement may be any hydraulic cement, that is, a powder binder which hardens by reaction with water to form a product which is durable in water. The most important cements are Portland cement and aluminate cement. Examples of cements are normal Portland cement, high early strength Portland cement, sulfate resistant cement, low-alkali cement, low heat cement, white Portland cement, Portland blast furnace cement, Portland pozzolana cement, Portland fly ash cement, and aluminate cement (high alumina cement).

The inorganic solid particles constituting a particulate filler may be any type of inorganic particle which fulfills the above conditions with respect to particle size and which do not to any substantial extent participate in the chemical reaction which cements the various types of particles together in bodies according to the invention. Examples of types of such inorganic solid particles which may be used are fly ash, fine quartz sand, slag, alumina, calcium carbonate and calcium carbonate-containing minerals such as dolomite and calcite, metakaolin, metal particles other than magnetic and magnetizable particles, and oxides such as Al₂O₃, SiO₂, zirconium oxide and titanium oxide. If desired, the inorganic solid particles may advantageously be sorted, e.g. by sieving, so that the particles have a narrow particle size distribution. Special examples of the inorganic solid particles are special strong mineral particles, e.g. the strong particles disclosed in WO81/3170, such as calcined bauxite particles.

The dispersing agent selected should be able to substantially eliminate locking forces between particles in mixes consisting of the above-mentioned powder composition and water, and should have no negative effect with respect to the quality of the final structure. The dispersing agent is normally a concrete plasticizer, in particular a concrete superplasticizer, also called a water reducing agent or a high performance water reducing agent. Such agents are known to be effective with respect to rendering possible the distribution of ultrafine particles, such as ultrafine silica, between densely packed cement particles. By the use of concrete superplasticizers, such as a sodium salt of a highly condensed naphthalene sulphonic acid/formaldehyde condensate, of which typically more than 70% consists of molecules containing 7 or more naphthalene nuclei, a uniform dispersion in a system combining the ultrafine particles, cement particles and particles of a magnetic or magnetizable particulate material and water may readily be obtained, making possible the desired dense packing of the particles in a low stress field. The amount of superplasticizer dry matter used is 0.1-4 percent, calculated on the total weight of the particles of the powder composition. An alternative manner of expressing the amount of dispersing agent would be to refer it to the particles of the subcomposition alone. In this case, the amount of superplasticizer dry matter may be expressed as being 1-4 percent by weight, calculated on the weight of the particles of the subcomposition.

It is believed that one of the main reasons for the attainment of the advantageous strength and durability characteristics in the bodies according to the invention, despite the low cement contents of these bodies, resides in the construction of a binder with the ultrafine particles arranged densely and homogeneously and effectively cemented together by the cement particles, in particular when the cement particles are relatively small. Thus, particularly strong and durable articles are obtained when the cement particles have an average size between 2 and 20 µm, preferably an average size between 2 and 10 µm, more preferably an average size between 2 and 7 µm, and most preferably an average size between 2 and 5 µm, e.g. an average size between 2 and 3 µm. It is also often preferred that the magnetic or magnetizable particles (and optionally any inorganic solid particles constituting a particulate inactive filler material) also are relatively small, as it is believed that this provides an added structural advantage to the system containing the ultrafine particles and the cement particles.

However, the magnetic or magnetizable particles (and preferably the cement particles) should be large compared to the ultrafine particles, which means that the magnetic or magnetizable particles (and preferably the cement particles) should preferably have an average size of at least 3 times the average size of the ultrafine particles, preferably at least 10 times the average size of the ultrafine particles, and more preferably at least 100 times the average size of the ultrafine particles. It is in this connection also very advantageous that the cement particles and the magnetic or magnetizable particles have a narrow particle size distribution, e.g. do not have any substantial particle size fraction approaching the size of the ultrafine particles, so that the cement particles and the magnetic or magnetizable particles do not interfere with the packing of the ultrafine particles.

The volume concentration of the powder composition in bodies according to the invention should be high, i.e. the volume concentration of the magnetic or magnetizable particles, the cement particles and the ultrafine particles should be not less than 0.55 throughout said body. This is obtained in a manner known per se, by using an effective dispersing agent in a sufficient amount, and, quite generally, by using well-known measures to ensure a dense and homogeneous structure, such as careful mixing and ensuring that the components of the powder composition are mutually compatible, which may be assessed, e.g., by a flow test as described in the examples. A high particle concentration in mixes prepared from the powder composition and water ensures allows the cement particles and the magnetic or magnetizable particles to arrange themselves so that they are in substantially direct particle-to-particle point contact to promote the formation of strong inter-particle bonds.

In preferred bodies of the invention, the volume concentration of the magnetic or magnetizable particles, the cement particles and the ultrafine particles is at least 0.60, more preferably at least 0.70, and still more preferably at least 0.75.

When special fine cement particles are used, in particular with a narrow particle size distribution as discussed below, bodies according to the invention can be made with a surprisingly high quality using normal mixing and casting techniques, and with an even higher quality using special mixing techniques employing vibration and pressure compaction. Furthermore, other types of concrete superplasticizers, for example melamine based concrete superplasticizers, e.g. Sikament®-FF, may also be employed.

It will be clear to a person skilled in the art that bodies according to the invention may be reinforced using e.g. steel bars, mesh or wire. Also, bodies prepared according to the present invention may be reinforced using fine fibres, whiskers, etc.

It may be of particular interest to combine the teachings disclosed herein with the teachings of US patent No. 4,979,992, to which reference is made and which is herewith incorporated in the present specification by reference. An equivalent disclosure is found in the published international patent application having publication number WO87/07597. The above-mentioned US patent discloses so-called "compact reinforced composite" ("CRC") materials. These materials comprise a combination of a rigid, dense and strong matrix comprising a base matrix which is reinforced with a high content of relatively fine fibers and which is further reinforced with a high content of main reinforcement, e.g. in the form of steel bars, wires or cables. The CRC structures provide cement-based materials which have a strength like that of structural steel, while at the same time being a composite material. This allows the achievement of various other desirable properties not available with materials such as steel, for example chemical resistance, and further allows the construction of large, massive structures for which conventional materials, e.g. steel and conventional reinforced concrete, are unsuitable. The main principle of these CRC materials is the combination of a relatively large amount of heavy main reinforcement embedded in a fiber-reinforced matrix which is strong and very rigid, but also very ductile in spite of the fact that the base matrix material per se is typically hard and brittle. The CRC materials thus function in a similar manner as conventional reinforced concrete, i.e. the pressure load is predominantly carried by the fiber-reinforced matrix and the tensile load is predominantly carried by the main reinforcement, the fiber-reinforced matrix transferring forces between the components of the main reinforcement. However, the CRC materials, with their unique combination of a strong base matrix and a high content of main reinforcement, are able to resist much greater loads than conventional steel-reinforced concrete and may be employed in a wealth of applications for which conventional reinforced concrete is not suitable, e.g. in electric motors, generators, etc. prepared in accordance with the teachings of the present invention.

The bodies prepared according to the present invention may in particular constitute a component of an electric apparatus, an electric machine, or an electric system or may constitute the electric apparatus, the electric machine or electric system per se. Such bodies may for example constitute an armature of a solenoid inductor or transformer, or a stationary or movable component of an electric machine, such as a rotor or stator component of an electric AC or DC motor, or an electric generator, eg. of an asynchronous or synchronous motor.

According to a specially advantageous embodiment of the invention, the cement particles have a narrow particle size distribution with the ratio D₉₀/D₁₀ of at the most about 12. In principle, the particle size distribution should be as narrow as possible, and very desirable values of the ratio D₉₀/D₁₀ for the cement particles are in the range of 3-10, in particular 3-7 and more preferred 3-5.

According to a further preferred embodiment, the cement particles should preferably have as little content of very fine particles as possible, as very fine cement particles may disturb the packing of the ultrafine particles and/or may dissolve completely in the mix water and cause undesired early hardening phenomena which can disturb the attainment of an optimum homogeneity. For this reason, it is preferred that the ratio D₁₀/D₅ of the cement particles is at the most 1.5.

Such cement particles are easier to incorporate into the mixes with attainment of maximum density, and apart from giving rise to a higher quality of the resulting shaped articles, they also give advantages during the production of the articles, such as a longer pot life and a lower requirement for the amount of dispersing agent.

It is preferred that the ultrafine particles have an average size in the range of 0.03-1 µm, in particular an average size of about 0.1-0.5 µm.

The ultrafine particles are preferably spherical particles. A relatively broad particle size distribution of the ultrafine particles will give the most dense packing under ideal conditions, but this may in certain cases be counteracted by an increased difficulty in obtaining a homogeneous arrangement of the particles, the finer the particles are. For this reason, it may be preferred that the ultrafine particles also have a narrow particle size distribution, such as a particle size distribution with the ratio D₉₀/D₁₀ of at the most about 20, preferably at the most about 10, more preferably at the most about 5. The ultrafine particles may also comprise two particle size fractions, such as one in the range of 0.5-1 µm and another one in the range of 0.05-0.1 µm, preferably with one or both of the fractions being narrowly graded as mentioned above.

Interesting magnetic or magnetizable particles are those having an average size in the range of 50-100 µm, or particles having an average size in the range of 2-40 µm, in particular 2-20 µm, e.g. 2-10 µm and as small as 2-5 µm. It is especially valuable to have larger magnetic or magnetizable particles which have a narrow size distribution with the ratio D₉₀/D₁₀ being at the most about 10, preferably at the most about 6.

The magnetic or magnetizable particles may comprise two fractions with gap grading, one fraction having an average size in the range of 50-100 µm and the other fraction having an average size in the range of 2-10 µm. It is especially preferred that at least one of the magnetic or magnetizable particle fractions has a narrow particle size distribution, the ratio D₉₀/D₁₀ of the fraction having an average size in the range of 50-100 µm being at the most 4, and/or the ratio D₉₀/D₁₀ of the fraction having an average size in the range of 2-10 µm being at the most about 8. All of these measures serve to increase the density and quality of the binder and to facilitate processing, corresponding to what is explained above.

It is to be understood that the powder composition may, e.g., be one which contains the ultrafine particles, the cement particles, and the magnetic or magnetizable particles, and optionally a particulate inactive filler material, and to which water and the dispersing agent are added to form a mix, or it may be one which additionally contains the dispersing agent, and to which only water is to be added to form a mix. The magnetic or magnetizable particles may also be added to e.g. a mixture of the cement particles and the ultrafine particles, after which water and the dispersing agent may be added. In any case, the types and amounts of the constituents and, with respect to the particles, their particle sizes and particle size distributions, can suitably be adapted in accordance with the above discussion.

The production of bodies according to the present invention may be performed in accordance with normal mixing and casting techniques as known, e.g., for dense materials with a binder matrix comprising microsilica particles homogeneously arranged between densely packed cement particles. Such techniques, which are aimed at arranging the particles in a homogeneous and dense system, involve sufficient mixing and sufficiently long mixing times to obtain a well-saturated, homogeneous, dense system. Such methods and additional methods which employ pre-mixing of the finest components and subsequent addition of the somewhat larger particles are described in the examples. In many cases, it will be preferred that the curing is performed without any initial heating, so as to make it possible for the small amount of cement to diffuse throughout the material before any substantial hardening takes place, but it is also possible to utilize heat curing and other curing methods known to increase the strength of conventional cement-bound materials.

It is believed that magnetic or magnetizable bodies prepared according to the present invention are able to tolerate considerably higher temperatures than conventional magnetic or magnetizable materials, since the cement-based binders prepared from powder compositions according to the invention are able to tolerate such high temperatures. Thus, it is contemplated that bodies according to the invention may be able to tolerate temperatures up to the Curie point.

It will be understood that the components of the particle system should be compatible from a chemical and surface chemical point of view, in particular the ultrafine particles, the cement particles, and the dispersing agent should be selected so that they will be compatible with each other. This may, e.g., be accomplished as described in WO88/00575, which discloses that the cement particles and the ultrafine particles A should be selected and/or the mix adapted so that the content of water-soluble alkali in the mix originating from the mineral solids in the mix is at the most 0.30%, calculated as Na₂O equivalents, relative to the weight of the cement in the mix.

As explained above, the bodies according to the present invention may constitute an electric apparatus, an electric machine or an electric system, for example a generator or a motor, or a part thereof. However, it is also contemplated that the bodies of the invention may be employed for a variety of other purposes which take advantage of their strength and durability as well as their high content of magnetic or magnetizable particles. Among the possible uses for such bodies are the following:
As permanent magnets for fastening and transport applications in industry, for example by casting magnetic or magnetizable material into a shop floor, for fastening applications in the home, and in situations in which "plastic magnets" currently are used
Shielding of high and low frequency electrical installations, e.g. by constructing such installations inside magnetic concrete prepared according to the invention
For purposes in which durability and/or resistance to corrosion is essential, e.g. underwater applications
As filler material for obtaining a more optimal control of the magnetic field in e.g. electric motors
Regardless of how the magnetic or magnetizable bodies of the invention are employed, they have the advantage that they can easily be cast in the desired shape and, if desired, readily subjected to processing after casting. However, due to the fact that the bodies generally can be cast in the exact shape desired, the cast bodies will normally require little or no subsequent processing. Furthermore, by adapting the binder to the intended application, lightweight magnets that are easily transported may be prepared.

The present invention will now be further described with reference to the drawings, in which
Fig. 1 is a perspective, schematic and partly broken away view of a solenoid implemented in accordance with the teachings of the present invention,
Figs. 2a and 2b are schematic views disclosing a segment of the material of the solenoid shown in Fig. 1 manufactured from DSP material and from conventional cement material, respectively,
Fig. 3 is a perspective view of a mold for casting or molding a component of an AC electric motor in accordance with the teachings of the present invention also disclosing a step of introducing DSP material into the mold,
Fig. 4 is an exploded and perspective view of an AC electric motor, the components of which are manufactured from DSP material in accordance with the teachings of the present invention,
Fig. 5 is a schematic and sectional view of a segment of a stator of the AC electric motor shown in Fig. 4,
Fig. 6 is a schematic and perspective view disclosing a mold for casting a transformer comprising a primary winding and a secondary winding from a DSP material in accordance with the teachings of the present invention,
Fig. 7 is a perspective and schematic view of a transformer cast in accordance with the teachings of the present invention and as disclosed in Fig. 6,
Fig. 8 is a sectional view of the transformer shown in Fig. 7 disclosing various structures and layers of the transformer,
Fig. 9 is a schematic and sectional view of an armature of a transformer or an electric motor, which armature is implemented in accordance with an alternative embodiment of the invention, and
Figs. 10 and 11 are schematic and sectional views illustrating two steps of manufacturing a winding in accordance with a particular aspect of the present invention in an electric component, viz. a transformer, including magnetic or magnetizable material.

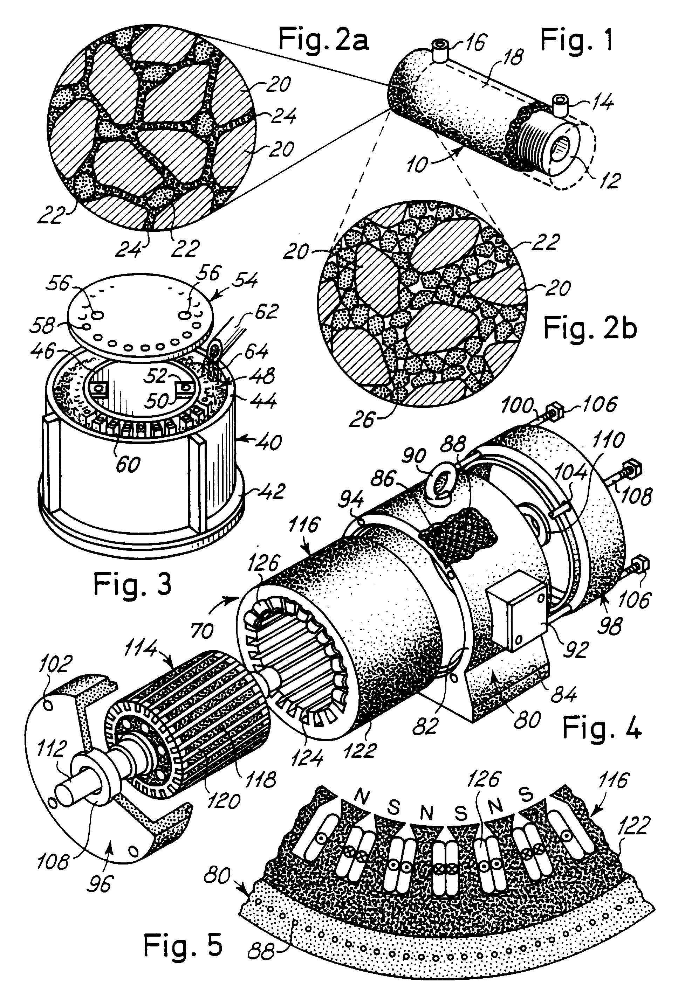

In Fig. 1, an inductor or solenoid 10 is shown comprising a helically wound conductor 12, which is connected to terminals 14 and 16 for connection to external electric or electronic components or circuitry and further a supporting and encapsulating casting 18. The casting 18 basically serves the purpose of supporting and protecting the helically wound conductor 12 and of supporting the terminals 14 and 16.

Still further, in accordance with the teachings of the present invention, the supporting and encapsulating casting 18 serves the purpose of providing a magnetic or magnetizable body, which encapsulates the helically wound conductor 12 and also constitutes a magnetic core of the solenoid or inductor 10. Thus, the material of the casting 18 includes particles of a magnetic or magnetizable material, which casting material also fills out the entire inner space of the helically wound conductor constituting the above mentioned magnetic core. Although the casting 18 may constitute a homogeneous casting, which, as will be described in greater detail below with reference to Figs. 2a and 2b, includes magnetic or magnetizable particles, the casting 18 may be made from homogeneous non-magnetic or non-magnetizable material, while the core of the helically wound conductor 12 is manufactured from a magnetic or magnetizable particle-containing material, preferably a DSP material.

Still further, the casting 18 may constitute a two-layer casting, an inner part of which includes magnetic or magnetizable particles and an outer layer of which constitutes a solid high strength supporting and protecting casing.

In Fig. 2a, an enlarged sectional view of a segment of the supporting and encapsulating casting 18 is disclosed, illustrating the advantageous, homogeneous and intimate packaging of magnetic or magnetizable particles 20 within a DSP supporting matrix including cement particles 22 and ultrafine particles of an inorganic material. As is evident from Fig. 2a, the magnetic or magnetizable particles 20 are arranged in a compacted yet spaced apart relationship.

In Fig. 2b, a conventional cement-based structure is shown including magnetic or magnetizable particles also shown in Fig. 2a and cement particles 22. As is evident from Fig. 2b, the magnetic or magnetizable particles 20 are arranged in a less compacted relationship as compared to the structure shown in Fig. 2a. Thus, the conventional cement-based matrix structure disclosed in Fig. 2b provides a less compact packaging of the magnetic or magnetizable particles 20 as compared to the DSP-based structure disclosed in Fig. 2a, in which the magnetic or magnetizable particles 20 are packed so intimately that they are almost equivalent to a sintered magnetic or magnetizable solid body.

In Fig. 3, a mold 40 is shown, which comprises a support 42, on which an outer cylindrical wall component 44 is supported and on which an inner cylindrical wall component 46 is also rigidly supported. Between the outer cylindrical wall component 44 and the inner cylindrical wall component 46, an annular space 48 is defined. The annular space 48 constitutes a mold cavity of the mold 40. The inner cylindrical wall component 46 is provided with two lugs 50 with through-going holes 52. The mold 40 further comprises a lid 54 with two through-going holes 56, which are to be arranged in registration with the holes 52 of the lugs 50. The inner cylindrical wall component 44 is at its lower end, i.e. its end supported on the support 42, provided with lugs corresponding to the lugs 50 shown in Fig. 3 for fastening the inner cylindrical wall component 44 relative to the support by means of bolts and nuts. The outer cylindrical wall component 46 is registered relative to the support 42 by means of a central protruding part of the support 42.

Apart from the two holes 56, a plurality of circumferentially spaced apart through-going holes 58 is provided in the lid 54, which holes 58 are provided in a specific number corresponding to a number of segments of a stator component to be cast within the mold 40. The through-going holes 58 serve the purpose of maintaining a corresponding plurality of core elements 60, which are to produce longitudinally or axially extending trough-shaped inner recesses of the body cast in the mold 40, as will be evident from the below description of an electric motor shown in Fig. 1, which electric motor is manufactured from components cast from DSP-based magnetic or magnetizable particle-containing compositions as taught by the present invention.

In Fig. 3, a feeding tube 62 is further disclosed, which serves the purpose of feeding a homogeneously and intimately mixed casting compound 64 into the annular space 48 of the mold 40 for casting a body from a magnetic or magnetizable particle-containing DSP material. The introduction of the magnetic or magnetizable particle-containing DSP compound 64 into the annular space 48 continues until the annular space 48 is filled, whereupon the lid 54 is mounted. The lid 54 fits within the outer cylindrical wall component 44, rests on top of the end wall of the inner cylindrical wall component 46 and is fixed relative to the inner cylindrical wall component 46 by means of bolts which are introduced through the through-going holes 52 of the lugs 50 and further through the through-going holes 56 of the lid 54, which through-going holes 52 and 56 are arranged in registration.

A plurality of bolts are further introduced through the circumferentially spaced apart through-going holes 58 so as to maintain the core elements 60 in fixed positions relative to the lid 54 within the annular space 48. The core elements 60 are further maintained in fixed positions relative to the support 42 by means of an identical plurality of bolts, which are mounted in through-going holes of the support 42 for maintaining the core elements 60 in position relative to the support 42 of the mold 40, while the DSP and magnetic or magnetizable particle-containing casting compound is allowed to cure within the mold 40.

After the magnetic or magnetizable particle-containing DSP-based material has cured to such an extent that the cast or cured body cast within the mold 54 may be removed from the mold 40, the lid 54 is removed by removing the bolts extending through the through-going holes 56 and further the plurality of bolts extending through the circumferentially spaced apart, through-going holes 58, and cooperating with meshing internal threads of the core elements 60, whereupon the above-discussed bolts maintaining the core elements 60 in position relative to the support 42 are also removed in order to allow that the core elements 60 are removed. The inner cylindrical wall component 46 is also removable from the support 42.

After disassembling the lid, the core elements 60 and the inner cylindrical wall component 46, the outer cylindrical wall component 44 is removed from its support 42 allowing the cast magnetic or magnetizable component to be removed.

In Fig. 4, an exploded view of an electric motor 70 is shown, the components of which are manufactured from DSP-based material, and some of which in accordance with the teachings of the present invention are magnetic or magnetizable particle-containing components cast from magnetic or magnetizable particles containing DSP-based compositions. The electric motor 70, which is an AC electric motor and may constitute a synchronous motor or an asynchronous motor, comprises a central housing component 80, which is basically composed of two integrally cast components, viz. an annular component 82 and a base component 84. As is illustrated at 86, which refers to a cut away segment of the annular component 82, the annular component 82 is manufactured from reinforced high density DSP cement material. Thus, the annular component 82 includes fibre reinforcement 88, such as steel reinforcement, glass fibre reinforcement or any other appropriate metallic or non-metallic/magnetic or non-magnetic fibre reinforcement. The annular component 82 is further, as is evident from Fig. 4, provided with a lifting eyelet 90 and a terminal box 92. The annular component 80 is further provided with four through-going and axially extending apertures 94, which serve the purpose of receiving through-going bolts for fastening two housing end components 96 and 98 relative to the housing component 80 by means of through-going bolts 100, which extend through the axially extending through-going apertures 94 of the housing component 80 and further through through-going apertures 102 and 104 of the housing end components 96 and 98, respectively, and cooperate with nuts 106.

The housing end components 96 and 98 are cast from the same high density material as the housing component 80 and are provided with central bearing components 108 and 110, respectively. The central bearing components 108 and 110 serve the purpose of cooperating with a journalling shaft 112 of a rotor assembly 114 constituting a rotor of the electric motor 70.

Apart from the rotor assembly 114, the electric motor 70 comprises a stator assembly 116. The rotor and stator assemblies 114 and 116, respectively, are cast from a magnetic or magnetizable particle-containing DSP composition as discussed above with reference to Fig. 3. Thus, the rotor assembly 114 comprises a magnetic or magnetizable particle-containing DSP body 118, in which rotor segments 120 are received in helical recesses produced in the body 118, as the body 118 is cast from the DSP-based castable or curable composition in accordance with the teachings of the present invention.

Similarly, the stator assembly 116 comprises a stator body 122, which stator body 122 is identical to the body described above with reference to Fig. 3 and cast by means of the mold 40. The stator body 122 is provided with a plurality of internal, axially extending recesses 124, which are produced by means of the core elements 60 discussed above with reference to Fig. 3, when the stator body 122 is cast, and in which recesses 124 coil assemblies 126 are received.

Basically, the electric motor 70 shown in Fig. 4 is of a conventional structure and may constitute an asynchronous motor, a synchronous motor or any other AC or DC electric motor, the components of which are cast from high-strength DSP material. In accordance with the teachings of the present invention, the magnetizable components of the electric motor are cast from magnetic or magnetizable particle-containing DSP material. Apart from the steel reinforcement 88 of the central housing component 80, the housing component 80 and the housing end components 96 and 98 may comprise reinforcing shielding and/or material serving the purpose of reinforcing and/or magnetically shielding the electric motor relative to the environment, for reducing the magnetic field radiation of the electric motor in order to comply with environmental regulations or requirements and further for eliminating any impact on magnetic, sensitive external components or apparatus arranged adjacent to the electric motor.

In Fig. 5, a segment of the stator body 122 received within the central housing component 80 of the electric motor 70 is shown. Within the axially extending recesses 124 of the stator body 122, the above-described coil assemblies 126 are received. In Fig. 5, which is an enlarged sectional view of the stator assembly 116, the direction of the currents passing through the coil assemblies 126 are illustrated by the conventional electro-technical symbolism which also comprises the conventional North and South pole magnet generation.

In the specification above, a solenoid or inductor implemented in accordance with the teachings of the present invention is described with reference to Fig. 1, and an electric motor is also described above with reference to Figs. 4 and 5. The teachings of the present invention readily makes it possible to produce literally speaking any magnetic or magnetizable component of any electric or electro-technical system, plant, machine or the like. By producing the component or alternatively the entire machine, such as the above-described electric motor 70 shown in Fig. 4, from DSP material, an extremely high strength combined with an extremely low weight is obtained, as due to the extremely high strength of the DSP material, a weight reduction on the order of 30-50 per cent as compared to a conventional electric motor or machine is obtainable.

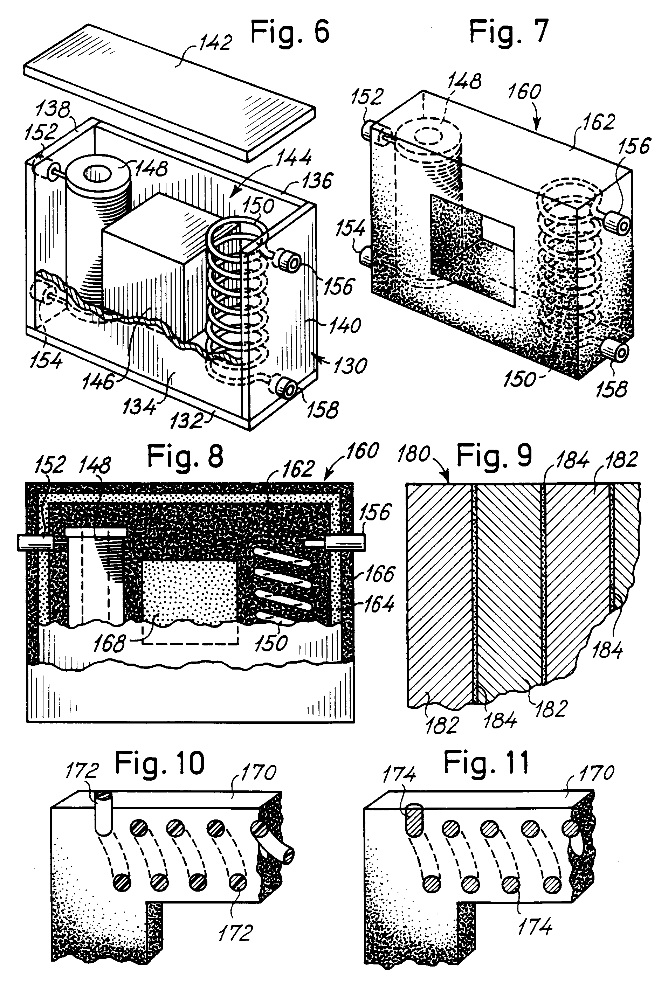

In Fig. 6, a mold 130 for casting a transformer in accordance with the teachings of the present invention is shown. The mold 130 comprises a base wall component 132, two side wall components 134 and 136, two end wall components 138 and 140, and further a top wall or lid component 142. A mold cavity 144 is defined within the inner space defined by the mold 130, in which mold cavity 144 a core 146 is arranged together with a primary winding 148 and a secondary winding 150. The primary winding 148 has its terminals connected to sockets 152 and 154 received in the end wall component 138, and the secondary winding 150 has its terminals connected to sockets 156 and 158 received in the end wall component 140.

The primary winding 148 may constitute a previously cast component, such as the component 10 discussed above with reference to Fig. 1, while the secondary winding 150 is a self-supporting helically wound secondary winding. The terms "primary winding" and "secondary winding" are generic terms, which are by no means to be construed limiting the possibility of providing one or more primary or secondary windings of a transformer in accordance with alternative techniques as compared to the technique discussed above with reference to Fig. 6. Thus, one of the windings or both windings may be provided in accordance with the technique discussed above with reference to Fig. 1, may constitute self-supporting components or may alternatively constitute conventional components supported by a magnetic armature or a coil former.

Within the mold cavity 144, the castable and curable cement-based powder composition characteristic of the present invention is introduced in a homogeneous, viscous to plastic mix with water for filling out the entire mold cavity. After the cement-based material has cured to such an extent that the cast product may be handled without any risk of breaking or cracking, the components of the mold 130 are removed, and the core 146 is further removed whereupon the structure disclosed in Fig. 7 is provided. This structure constitutes a transformer 160, in which a cast magnetic or magnetizable particle-containing DSP-based body 162 constitutes the armature of the transformer 160.

The transformer 160 may, as is evident from Fig. 8, be encapsulated within a high density and high strength encasing 164 and further within a magnetic shield 166. The encasing 164 and the magnetic shield 166 are preferably cast from a cement-based powder composition, the basic material of which is identical to that of the armature body 162. Thus, it has been realised that the DSP material may readily be cast after a very short period of curing has lapsed so that a new molding or casting step may be carried out on a "green" body, i.e. a previously cast body which has not yet totally cured to maximum strength, by which casting process an intimate contact and extremely high strength connection between the original "green" body and the new casting material is obtained. In Fig. 8, a filler material is also arranged within the cavity originally produced by the core 146 while the armature body 162 is cast within the mold 160.

As discussed above, the windings, such as the primary winding 148 and the secondary winding 150, of the transformer 160 in Figs. 7 and 8, may be provided in accordance with any appropriate technique as the previously cast component shown in Fig. 1, as a coiled core supported component or as a self-supporting component. In accordance with a particular aspect of the present invention, the winding of the transformer 160 and the corresponding winding of an electric component or an electronic component, such as a winding of an electric machine or motor, may be provided after the magnetic or magnetizable body, such as the armature body 162 of the transformer 160 has been cast.

In Fig. 9, a sectional and schematic view of an armature 180 is shown constituting a component of an electrotechnical plant, machine or the like, such as a transformer or an electric motor. Contrary to the above described components provided in accordance with the teachings of the present invention from a castable and curable cement-based powder composition including magnetic or magnetizable particles, the armature disclosed in Fig. 9 comprises a plurality of segments 182, which are made from a magnetic or magnetizable material such as iron or an iron alloy, e.g. iron powder as described in Example 1. The segments 182 are in accordance with a particular aspect of the present invention glued to one another by means of a cement-based glue comprising cement particles, ultrafine particles and a surface-active dispersing agent. The curable cement-based glue is introduced between the segments 182 in an extremely fine layer, as the dimensions disclosed in Fig. 9 are extremely exaggerated. After curing, the cement-based glue defines layers 184, which may be as thin as 20 µm.

A very important aspect of providing a magnetic or magnetizable component, such as an armature of a transformer, in accordance with the teaching of the present invention from a castable and curable cement-based powder composition comprising magnetic or magnetizable particles and further comprising cement-particles and ultrafine particles of an inorganic material and optionally a surface-active dispersing agent, or alternatively or additionally from magnetic or magnetizable bodies, which are glued together by means of a cement-based mass made from a solidifies or dried cement-based powder composition comprising cement-particles and ultrafine particles of an inorganic material and optionally a surface-active dispersing agent, relates to the capability of cement-based, cured materials to tolerate elevated temperatures, such as temperatures of the order of or in excess of 500-600°C. In contrast to conventional armature structures which are made from armature segments sintered and optionally glued and encased within an epoxy-based encasing, and which cannot tolerate exposure to a temperature on the order of 500°C, e.g. a transformer implemented in accordance with the teachings of the present invention may be arranged in an environment in which the transformer is exposed to a temperature of the order of 500-600°C. The limitation as to the temperature exposure of the transformer is by no means defined by the components of the transformer in question, however, defined or limited by the Curie point or the so-called magnetic transition temperature of the magnetic or magnetizable material involved. Thus, the Curie point of the magnetic or magnetizable particles or the solid magnetic or magnetizable segment, such as the segment 182 disclosed in Fig. 9, defines the maximum temperature to which the component in question may be exposed, as the cement-based material of the component may tolerate exposure to temperatures far in excess of the Curie point of the magnetic or magnetizable material in question.

Fig. 10 discloses a vertical sectional view through an armature body 170 of a transformer, which armature body 170 is produced basically in accordance with the above description with reference to Fig. 6, however, deviating from the above description in that the self-supporting secondary winding 150 is substituted by a helically wound core body 172, which is removed after the armature body 170 has cured, e.g. removed by melting the material of the core body 172, which may be manufactured from core materials well-known within the art per se, such as a plastic, stearin, wax, etc.

After the core body 172 has been removed, a helical passage is provided within the armature body 170, into which passage a highly conductive metal material is introduced as a liquid which is then allowed to solidify, thereby generating a solid conductor filling out the entire passage originally defined by the core 172.

In Fig. 11, a solid conductor is shown designated the reference numeral 174. Alternative techniques may be used for introducing the highly conductive metal material into the passage originally defined by the core 172, such as techniques involving the provision of a metal paste, such as a thick-film paste or a polymer-based paste, which techniques are per se well-known within the art and involves the provision of a paste, the introduction of the paste into the passage, curing the paste and optionally burning or sintering the paste.

### List of References

- 10: Solenoid or inductor
- 12: helically wound conductor
- 14: terminal
- 16: terminal
- 18: supporting and encapsulating casting
- 20: magnetic or magnetizable particles
- 22: cement particle
- 24: ultrafine particles
- 40: mould
- 42: support
- 44: outer cylindrical wall component
- 46: inner cylindrical wall component
- 48: annular space
- 50: lugs
- 52: hole
- 54: lid
- 56: hole
- 58: hole
- 60: core element
- 62: feeding tube
- 64: supply of material
- 70: electric motor
- 80: housing component
- 82: annular component
- 84: base component
- 86: cut away segment
- 88: reinforcement
- 90: lifting eyelet
- 92: terminal box
- 94: axially extending through-going aperture
- 96: housing end component
- 98: housing end component
- 100: bolt
- 102: hole
- 104: hole
- 106: nut
- 108: central bearing component
- 110: central bearing component
- 112: journalling shaft
- 114: rotor assembly
- 116: stator assembly
- 118: body
- 120: rotor segment
- 122: body
- 124: recess (axially extending)
- 126: coil assembly
- 130: mold
- 132: base wall component
- 134: side wall component
- 136: side wall component
- 138: end wall component
- 140: end wall component
- 142: top wall or lid component
- 144: mould cavity
- 146: core
- 148: primary winding
- 150: secondary winding
- 152: socket
- 154: socket
- 156: socket
- 158: socket
- 160: transformer
- 162: body
- 164: casing
- 166: magnetic shield
- 168: filler material
- 170: armature body
- 172: core
- 174: solid conductor
- 180: armature
- 182: segment
- 184: layer

### EXAMPLES

### MATERIALS AND METHODS

In the following, a general description is given of the materials and methods which may be used to prepare bodies according to the invention.

### Cement

In examples 2-6, a white Portland cement, e.g. a cement having a density of 3150 kg/m³, a Blaine surface of 411 m²/kg and approximately the following grain size distribution may be employed:

| | |
|---|---|
| %< 50 µm | 99.0 |
| %< 20 µm | 94.0 |
| %< 10 µm | 47.0 |
| %< 5 µm | 25.0 |
| %< 2 µm | 10.0 |
| %< 1 µm | 4.0 |

The white Portland cement may also be finely ground (see Example 4 and 5), giving it a Blaine surface of e.g. 757 m²/kg, a BET surface of e.g. 2950 m²/kg and approximately the following particle size distribution:

| | |
|---|---|
| %< 63 µm | 99.58 |
| %< 50 µm | 99.0 |
| %< 20 µm | 97.0 |
| %< 10 µm | 79.0 |
| %< 5 µm | 47.0 |
| %< 2 µm | 21.0 |
| %< 1 µm | 8.0 |
| %< 0.5 µm | 1.0 |

In Example 7, an aluminous cement, such as Alcoa CA-14, e.g. with a density of 2999 kg/m³ and approximately the following chemical composition (% by weight) may be employed:

| | |
|---|---|
| SiO₂ | 6.28 |
| Al₂O₃ | 63.92 |
| Fe₂O₃ | 0.07 |
| CaO | 27.48 |
| MgO | 0.11 |
| SO₃ | 0.01 |
| Loss on ignition | 0.17 |
| K₂O | 0.03 |
| Na₂O | 0.32 |
| Na₂O eq. | 0.34 |
| TiO₂ | 0.02 |

The aluminous cement may, e.g., have the following particle size distribution:

| | |
|---|---|
| %<50 µm | 94 |
| %<20 µm | 59 |
| %<10 µm | 35 |
| %<5 µm | 19 |
| %<2 µm | 6 |
| %<1 µm | 1 |

The aluminous cement may also be finely ground (see Example 8), e.g. with approximately the following particle size distribution:

| | |
|---|---|
| %<50 µm | 100 |
| %<20 µm | 91 |
| %<10 µm | 64 |
| %<5 µm | 41 |
| %<2 µm | 19 |
| %<1 µm | 9 |

### Iron powder

Iron powder with an average particle size of e.g. 20 µm and a density of about 7800 kg/m³ may be employed.

In Example 5, a fine iron powder with a density of about 7800 kg/cm³ and an average particle size of about 5 µm may be employed.

### Microsilica

Microsilica (e.g. density 2220 kg/m³, specific surface (BET) 21,400 m²/kg) with e.g. the following chemical composition may be used:

| | |
|---|---|
| SiO₂ | 84.92 |
| Al₂O₃ | 1.30 |
| Fe₂O₃ | 3.25 |
| CaO | 0.48 |
| MgO | 1.32 |
| SO₃ | 0.75 |
| Loss on ignition | 3.32 |
| K₂O | 2.81 |
| Na₂O | 0.93 |
| Na₂O eq. | 2.78 |

### Iron sand and stone aggregate

Instead of regular sand and stone normally used in concrete, bodies according to the invention may be prepared using e.g. iron "sand" (particle size 0-4 mm) or "stone" (particle size 4-16 mm).

### Dispersing agent and water

As a dispersing agent, a concrete super-plasticizer with the trade name "Flube" may be used. Flube is a sodium salt of a highly condensed naphthalene sulphonic acid/formaldehyde condensate, with an estimated powder density, referring to the density when dissolved in water, of 1600 kg/m³. The water employed is typically common tap water.

### Mixing

Two types of materials may be prepared: mortar having a maximum particle size of less than 4 mm and concrete containing particles larger than 4 mm and having a maximum particle size of either 11 mm or 16 mm. In preparing concrete, the mortar portion is prepared first, after which the stone is added, so that the mixing of the mortar is the same regardless of whether the mortar is used alone or together with the stone to form a concrete.

Mixing of the mortars may, e.g., take place in a 20 l paddle mixer (for the preparation of mortar samples) or in a 50 l paddle mixer (Eirich) (for the preparation of mortars to be used in concrete). The dry materials, i.e. all the materials except water, are first mixed for one minute, after which the water is added while the mixer rotates. The addition of water takes about 10-20 seconds. Mixing is then continued for 10 minutes (in certain cases somewhat longer).

During the mixing after addition of water, the consistency is typically in the beginning dry and the colour is light, but afterwards the mass gradually acquires a darker colour and a moist consistency, whereby a plastic and more homogeneous material is gradually obtained, the material finally becoming a more fluid homogeneous mass.

After mixing, the mortars' consistency may be determined by flow table measurements according to the ASTM flow table measurement technique (ASTM C230-83). With this technique, the diameter of a mortar sample is measured first prior to impact and subsequently after impact performed by letting the mortar sample fall a distance of about 1 cm 20 times.

### Mixing of concrete

Mixing of concrete takes place after premixing of the mortar (in a 50 l mixer) as described above, after which stone is added and mixing is carried out for 5 minutes. The consistency of the mixes is typically moist and the structure is open with a thin layer of mortar attached to the surface of the stones. After subsequent compaction by vibration as described below, the mass becomes homogeneous and coherent.

### Casting of samples

Samples may be cast as cylinders with a length of 200 mm and a diameter of 100 mm. The samples may be cast on a vibrator table at a relatively low effect at a frequency of e.g. 50 cycles/sec. and an amplitude of e.g. 0.44 mm (peak to peak 0.88 mm). The samples may also be prepared on a vibrator table with a greater effect working at a frequency of e.g. about 150 cycles/sec. and an amplitude of e.g. 0.3 mm. The preparation of samples on the 50 cycles/sec. vibrator table may be accomplished by filling the mix in cylindrical molds in 4-5 portions over a period of 1 to 2 minutes. To avoid excessive swelling of the material during vibration (a resonance phenomenon which often occurs during vibratory compaction of soft materials in an open mold, especially fine grained materials), a steel rod with crosssectional dimensions of e.g. 3 x 3 cm may be used as a counterweight. After filling, the molds are closed by fastening a lid on the cylinders.

The preparation of samples on the 150 cycles/sec. vibrator table may be accomplished with vibration under combined static and dynamic pressure, established with a steel cylinder (weight e.g. 8 kg) placed on top of the material during vibration. The samples are cast by pouring the mix in 4 to 5 portions over a period of 1 to 2 minutes. After filling, the molds are closed as described above.

### Hardening/curing

A series of different hardening procedures may be used.

### Hardening at 80°C

The cast samples in the sealed molds are placed in water having a temperature of 80°C within 1 to 2 hours after casting. The samples are removed from the hot water after 24 hours and placed (still in the sealed molds) in air having a temperature of 20°C for approximately 24 hours, after which the molds are removed and the samples are kept in air (20°C, approx. 70% relative humidity) until they are tested for strength.

### Hardening at 20°C

The cast and sealed samples are kept for 24 hours at 20°C (covered by wet towels and sealed in plastic), after which the molds are removed and the samples are placed in water with a temperature of 20°C for extended hardening. Some of these samples may be tested for strength immediately after curing in water. Others may be kept for 5 to 7 days at a temperature of 45°C in air before testing for strength.

### EXAMPLE 1

### Casting of magnetizable materials according to the invention

A series of casting experiments with magnetizable low-cement materials according to the invention was carried out.

The following materials were employed:
Steel powder, density 7628 kg/m³, with the following grain size distribution:

| | |
|---|---|
| < 125 µm | 97% |
| < 106 µm | 96% |
| < 90 µm | 78% |
| < 75 µm | 73% |
| < 63 µm | 55% |
| < 38 µm | 27% |

Iron powder (NC 100.24) with the following grain size distribution:

| | |
|---|---|
| < 200 µm | 100% |
| < 90 µm | 58% |
| < 63 µm | 32% |
| < 45 µm | 26% |

Iron powder (ABC 100.30). This iron powder is substantially similar to iron powder NC 100.24.

The white Portland cement, microsilica, Flube and water are described under "Materials and Methods".

Steel fibres: cylindrical brass coated fibres ("Dramex", from Bekaert, Belgium), diameter 0.15 mm, length 6 mm. The fibres have a tensile strength of about 2900 MPa.

The mix compositions (in grams) are given in the following table.

| | Mix No. | | | |
|---|---|---|---|---|
| | 1 | 2 | 3 | 4 |
| White Portland cement | 927 | 232 | 232 | 232 |
| Microsilica | 885 | 221 | 221 | 221 |
| Steel powder | 5103 | | | |
| Iron powder (NC 100.24) | | 1276 | 2552 | |
| Iron powder (ABC 100.30) | | | | 2176 |
| Flube | 112 | 28 | 28 | 28 |
| Water | 676 | 140 | 329 | 169 |
| Steel fibres | 240 | | 60 | 80 |

The materials were prepared by mixing the powder components in a Hobart mixer for 1-3 minutes, followed by 10 minutes of mixing after addition of the water and a further 3 minutes of mixing after addition of the steel fibres. A series of samples were cast in the form of 1) cylinders with a diameter of 45 mm and a height of 90 mm, 2) cylinders with a height of about 50 mm and a diameter of 50 mm, 3) E-shaped articles with a thickness of 32 mm, and 4) prisms with dimensions of 20 x 125 x 32 mm.

The mixes were easily flowable before addition of the fibres and flowed well during vibration (about 50 Hz, acceleration about 45 m/s²). The following observations were made:

Mix 1 was too soft and separated.

Mix 2 without the fibres resulted in brittle materials, as shown by the fact that the E-shaped articles broke as the molds were removed.

A cylindrical sample (45 x 90 mm) from mix 3 was provided with a smooth finish by sanding with sand paper, after which an axial hole was drilled in the sample. This illustrates the possibility of subjecting the bodies according to the invention to various treatments after casting, as is the case with steel bodies.

Since the primary purpose for preparing these articles was to test the processing techniques, no magnetic measurements were made. However, simple experiments showed that the materials did in fact have magnetic properties, as they were attracted by permanent magnets. It was also shown by simple experiments (winding a wire around the E-shaped articles, after which a current was sent through the wire) that the materials can function as part of an electromagnet.

### EXAMPLE 2

### Mortars with varying cement contents

Mortars containing silica fume and binders with different contents of cement and iron powder may be prepared. The 5 mortars are referred to according to the cement content by volume based on the content of cement in mix C-100%, which contains no iron powder.
C-100% C-50% C-25% C-12.5% C-6%
The binders may comprise white Portland cement as the active particles, iron powder and microsilica.

The mix compositions may be as follows:

| | g per approx. 10 l mortar | | | | |
|---|---|---|---|---|---|
| | C-100% | C-50% | C-25% | C-12.5% | C-6% |
| White cement | 7730 | 3865 | 1935 | 965 | 465 |
| Silica | 1845 | 1845 | 1845 | 1845 | 1845 |
| Iron powder | 0 | 9322 | 13975 | 16301 | 17519 |
| Flube | 235 | 235 | 235 | 235 | 235 |
| Iron sand 0-0.25 mm | 5940 | 5940 | 5940 | 5940 | 5940 |
| Iron sand 0.25-1 mm | 11835 | 11835 | 11835 | 11835 | 11835 |
| Iron sand 1-4 mm | 32670 | 32670 | 32670 | 32670 | 32670 |
| Water | 1285 | 1285 | 1285 | 1285 | 1285 |

### EXAMPLE 3

### Magnetic concrete

A concrete with a fine mortar binder and a high concentration of irregularly shaped iron stone (5-12 mm) may be prepared as described below.

The fine mortar of this example may comprise the same binder material as in Example 2 (C-25%).

The mix composition may be as follows:

| | Grams |
|---|---|
| White cement | 1935 |
| Silica | 1845 |
| Iron powder | 13975 |
| Flube | 235 |
| Iron sand 0-0.25 mm | 15028 |
| Iron sand 0.25-1.0 mm | 30055 |
| Iron stone 5-8 mm | 21545 |
| Iron stone 8-11 mm | 59575 |
| Water | 1285 |

The samples may be produced as described above in "Materials and Methods" by mixing in a 50 l paddle blender in a two-step process, i.e. first the mortar is mixed, after which (after addition of the stone) the concrete is mixed.

### EXAMPLE 4

### Mortars comprising finely ground cement

The effect of using particularly fine ground cement in two mortars with a very low cement content may be investigated.

The mortars in this example are equivalent to the mortars C-12.5% and C-6% of Example 2, with the exception that the cement in Example 2 is replaced by a very finely ground cement.

Possible mix compositions (in grams) are shown in the following table:

| Mixture | I C-12.5% | II C-6.0% |
|---|---|---|
| Finely ground white cement | 965 | 465 |
| Microsilica | 1845 | 1845 |
| Iron powder | 16301 | 17519 |
| Flube | 235 | 235 |
| Iron sand 0-0.25 mm | 5940 | 5940 |
| Iron sand 0.25-1 mm | 11835 | 11835 |
| Iron sand 1-4 mm | 32670 | 32670 |
| Water | 1285 | 1285 |

The same procedure as described for Example 2 may be used.

### EXAMPLE 5

### Mortars with finely ground cement and fine iron powder

Materials (mortar) comprising about 25% by volume of cement and about 75% by volume of "regular" iron powder (average particle size e.g. 20 µm) and fine iron powder (average particle size e.g. 5-10 µm) may be prepared. In order to ensure a homogeneous distribution of the binding materials, a very fine cement may be employed.

The mix composition may be as follows:

| | Grams |
|---|---|
| Iron powder | 13640 |
| Fine iron powder | 6818 |
| Finely ground white cement | 1935 |
| Flube | 235 |

| Iron sand | |
|---|---|
| 0-0.25 mm | 5940 |
| 0.25-1 mm | 11835 |
| 1.0-4.0 mm | 32670 |
| Water | 1400 |

Mixing and casting may take place as described in Example 2 and in "Materials and Methods".

### EXAMPLE 6

### Mortars with iron powder

Mortars may be prepared using iron powder and iron sand.

The following mix may be employed:

| | |
|---|---|
| White Portland cement | 7724 g |
| Microsilica | 7377 g |
| Iron powder | 43480 g |
| Flube | 931 g |
| Iron sand 0-1 mm | 61280 g |
| Iron sand 1-4 mm | 81667 g |
| Water | 5631 g |

The iron powder may e.g. have an average particle size of about 50-60 µm.

### EXAMPLE 7

### Mortars with aluminous cement

Mortars may be prepared using a refractory high alumina cement (e.g. Alcoa CA-14) and the following mix compositions (in grams):

| | C-25% | C-12.5% | C-6% |
|---|---|---|---|
| High alumina cement | 6408 | 3196 | 1540 |
| Microsilica | 6458 | 6458 | 6458 |
| Iron powder | 48914 | 57056 | 61319 |
| Flube | 823 | 823 | 823 |
| Iron sand 0-1 mm | 56212 | 56212 | 56212 |
| Iron sand 1-4 mm | 78946 | 78946 | 78946 |
| Water | 4498 | 4498 | 4498 |

### EXAMPLE 8

### Mortar with finely ground aluminous cement and iron sand

The aluminous cement of Example 7 may be finely ground and used to prepare the following mix (6% by volume cement, based on cement + iron powder):

| | |
|---|---|
| Fine aluminous cement | 1540 g |
| Microsilica | 6458 g |
| Iron powder | 61319 g |
| Flube | 823 g |
| Iron sand 0-1 mm | 56212 g |
| Iron sand 1-4 mm | 78,946 g |
| Water | 4498 g |

### EXAMPLE 9

### Materials prepared with fine narrowly graded and extremely dense binders

The following materials may be prepared: 1) fine binders with a maximum particle size of about 12 µm, and 2) extremely dense binders prepared by adding fine sand (63-90 µm) to the fine binders.

### MATERIALS

- Cement:: e.g. air-classified white Portland cement with a narrow particle size distribution and a small particle size (e.g. average size 5 µm and substantially all of the particles between 2 and 10 µm), density e.g. 3150 kg/m³.
- Iron powder:: iron powder with a narrow particle distribution and a small particle size (average size e.g. 6 lm and substantially all of the particles between 2 and 12 lm), density about 2320 kg/m³.
- Microsilica:: e.g. as described in "Materials and Methods".
- Dispersing agent:: e.g. Flube
- Fine iron sand:: particle size e.g. between 63 and 90 lm.
- Iron sand:: 0-4 mm (as in Example 2).

The mix compositions (in g) may be as follows.

| Mortars with fine binders | Mix No. | | | |
|---|---|---|---|---|
| | I | II | III | IV |
| Cement | 213 | 213 | 213 | 213 |
| Iron powder | 1580 | 1580 | 1580 | 1580 |
| Microsilica | 200 | 200 | 200 | 200 |
| Flube | 24 | 24 | 24 | 24 |
| Water | 130 | 135 | 140 | 150 |
| Iron sand 0.25-1 mm | 988 | 988 | 988 | 988 |
| Iron sand 1-4 mm | 1975 | 1975 | 1975 | 1975 |

### Mortar with dense binder - Mix V

Fine mortar IV plus 2250 g fine iron sand (63-90 lm).

### PREPARATION OF THE MIXES AND DETERMINATION OF FLUIDITY

The dry materials for the fine mortar (everything except the water) may e.g. be mixed for 1 min. in a Hobart mixer.

The water is then added, first 120 g and then gradually to 130 g, and mixing is carried out for 5-10 min. Flow measurements may then be made, after which another 5 g of water is added and mixing is carried out for another 5-10 min., followed by flow measurements for this mix (mix II). The same procedure may be used for mixes III and IV. 750 g of fine sand (63-90 µm) are then added and mixing is carried out for another 5-10 min., after which cylinders are cast, e.g. using vibration with a light counterweight. The samples are hardened e.g. for about 60 hours in water at 80°C in sealed molds. The samples are then removed from the molds and after cooling to 20°C density, sound velocity and compressive strength may be determined.

### EXAMPLE 10

Experiments may be carried out on mortars to illustrate the effect of 1) the water requirement necessary to achieve a given flow behaviour, and 2) the flow behaviour of various factors such as the fineness and particle size distribution of the cement.

In the experiments, the individual mortars are first mixed using a certain amount of water, after which the amount of water is gradually increased and the consistency and flow behaviour of the mix is observed and measured. The consistency may be determined as described in materials and methods, i.e. using the ASTM C230-83 standard for flow table measurements. The materials which may be used in the various mixes are also described in the "Materials and Methods" section.

Mixing may e.g. take place in a Hobart mixer. The dry ingredients (including the dispersing agent (e.g. Flube, in powder form) are first mixed for one minute. Water is subsequently added. The materials are then mixed, and the consistency is determined visually. Water is subsequently added at intervals of about 2-5 minutes, and the behaviour of the mixes is recorded, including when the mix changes from a damp, lumpy condition to a plastic condition. After this change, more water is added, and the flow behaviour of the mix is determined after each new addition of water. Furthermore, the volume amount of liquid in the binder as well as the volume amount of powder in the binder may be determined. Possible mix compositions (in grams) are given below.

| | Mix No. | |
|---|---|---|
| | 1 | 2 |
| Fine iron sand | 1000 | 2250 |
| Fine white Portland cement | 800 | |
| Air-classified fine white cement | | 600 |
| Microsilica | 200 | 150 |
| Flube | 24 | 18 |

### EXAMPLE 11

It is contemplated that a motor, e.g. as described with reference to the drawings, may be prepared according to the invention using a mix with the following composition (per kg):

| | |
|---|---|
| White Portland cement | 320 g |
| Microsilica | 64 g |
| Flube | 8 g |
| Bauxite 0-1 mm | 212 g |
| Bauxite 1-4 mm | 396 g |
| Water | (about) 76 g |

2 kg of steel fibres (0.4 x 12 mm) are added per 10 kg of the dry mix.

Mixing may e.g. comprise dry mixing of the cement, microsilica, Flube and bauxite for 1 minute, addition of the water followed by mixing for 8 minutes, and addition of the steel fibres followed by mixing for 5 minutes. The material may be cast using vibration (e.g. 50 Hz).

## Claims

1. A castable and curable cement-based powder composition comprising:
i) particles of a magnetic or magnetizable particulate material, and
ii) a subcomposition including:
cement particles,
ultrafine particles of an inorganic material, said ultrafine particles having an average particle size in the range of 0.002-2 µm, and
a surface-active dispersing agent in an amount of 0.1-4%. by weight dispersing agent based on the total weight of said cement particles and said ultrafine particles,
said ultrafine particles constituting 3-30% by volume of said powder composition,
said cement particles constituting 2-70% by volume of said powder composition,
said particles of said magnetic or magnetizable particulate material constituting 10-95% by volume, preferably 30-95% by volume of said powder composition, and
said particles of said subcomposition having an average particle size of at the most 10 µm.

2. A composition according to claim 1, further comprising inorganic solid particles constituting a particulate inactive filler material, said inorganic solid particles having an average size in the range of 3-100 µm.

3. A composition according to claim 1 or 2, at least 90% by volume of said particles of said magnetic or magnetizable particulate material having a size between 1 µm and 200 µm, preferably a size between 1 µm and 150 µm, and more preferably a size between 1 µm and 100 µm.

4. A composition according to any of claims 1-3, said cement particles having an average size between 2 and 20 µm, preferably an average size between 2 and 10 µm, more preferably an average size between 2 and 7 µm, and most preferably an average size between 2 and 5 µm, e.g. an average size between 2 and 3 µm.

5. A composition according to any of claims 1-4, said ultrafine particles having an average size between 0.03 and 1 µm, preferably an average size between 0.1 and 0.5 µm.

6. A composition according to any of the preceding claims, said cement particles defining a volume B of said composition, said particles of a magnetic or magnetizable particulate material defining a volume C of said composition, and said volume B being at the most 0.5 x (volume B + volume C).

7. A composition according to claim 6, said volume B being in the range of from 0.45 x (volume B + volume C) to 0.30 x (volume B + volume C), or
in the range of from 0.30 x (volume B + volume C) to 0.25 x (volume B + volume C), or
in the range of (0.25-0.20) x (volume B + volume C), or
in the range of (0.20-0.15) x (volume B + volume C), or
in the range of (0.15-0.10) x (volume B + volume C), or
in the range of (0.10-0.05) x (volume B + volume C), or
in the range of (0.05-0.02) x (volume B + volume C), or
in the range of (0.02-0.002) x (volume B + volume C).

8. A composition according claim 6 or 7, said ultrafine particles defining a volume A of said composition, and said volume B being
in the range of (0.30-0.40) x (volume A + volume B + volume C), or
in the range of (0.20-0.30) x (volume A + volume B + volume C), or
in the range of (0.15-0.20) x (volume A + volume B + volume C), or
in the range of (0.05-0.10) x (volume A + volume B + volume C), or
in the range of (0.01 - 0.005) x (volume A + volume B + volume C).

9. A composition according to any of claims 6-8, the sum of said volume B and said volume C constituting at least 0.425, preferably at least 0.45, more preferably at least 0.475, more preferably at least 0.500, more preferably at least 0.525, more preferably at least 0.550, more preferably at least 0.575, more preferably at least 0.600, more preferably at least 0.626, more preferably at least 0.650, of the total volume of said composition.

10. A composition according to any of the preceding claims wherein said cement particles are chosen from the group consisting of normal Portland cement, high early strength Portland cement, white Portland cement, Portland blast furnace cement, Portland pozzolana cement, low-alkali cement, fly ash cement, sulfate resistant cement and alumina cement.

11. A composition according to any of the preceding claims wherein said ultrafine particles are chosen from the group consisting of alumina, calcium carbonate, calcium hydroxide, rice husk ash, metakaolin, SiO₂, TiO₂, ZrO₂, and ground and/or sieved fly ash, quartz and slag.

12. A composition according to claim 11 wherein said ultrafine particles comprise microsilica from the production of ferrosilicon or silicon metal.

13. A composition according to any of the preceding claims wherein said inorganic solid particles constituting said particulate inactive filler material are chosen from the group consisting of fly ash, fine quartz sand, slag, alumina, calcium carbonate and calcium carbonate-containing minerals, metakaolin, Al₂O₃, SiO₂, TiO₂, ZrO₂ and refractory grade bauxite.

14. A composition according to any of the preceding claims wherein said surface-active dispersing agent is a concrete superplasticizer in an amount of 1-4% by weight superplasticizer dry matter based on the total weight of said cement particles and said ultrafine particles.

15. A composition to any of the preceding claims wherein said cement particles have a narrow particle size distribution as defined by a ratio D₉₀/D₁₀ being at the most 12, in which D₉₀ is the diameter of the 90th percentile (by weight) of said cement particles and D₁₀ is the diameter of the 10th percentile (by weight) of said cement particles.

16. A composition according to any of the preceding claims wherein said particles of said magnetic or magnetizable particulate material have an average particle size in the range of 50-100 µm.

17. A composition according to any of claims 1-15 wherein said particles of said magnetic or magnetizable particulate material have an average particle size in the range of 2-50 µm.

18. A composition to any of the preceding claims wherein said particles of said magnetic or magnetizable particulate material have a narrow particle size distribution as defined by a ratio D₉₀ₘ/D₁₀ₘ being at the most 10, preferably at the most 6, in which D₉₀ₘ is the diameter of the 90th percentile (by weight) of said particles of said magnetic or magnetizable particulate material and D₁₀ₘ is the diameter of the 10th percentile (by weight) of said particles of said magnetic or magnetizable particulate material.

19. A composition according to any of claims 1-15 wherein said particles of said magnetic or magnetizable particulate material comprise two fractions, one fraction having an average size in the range of 50-100 µm, the other fraction having an average size in the range of 2-10 µm.

20. A composition according to claim 19 wherein at least one of said fractions has a narrow particle size distribution, as defined by said fraction having an average size in the range of 50-100 µm having a ratio D₉₀ₘ/D₁₀ₘ of being at the most 4, and/or said fraction having an average size in the range of 2-10 µm having a ratio D₉₀ₘ/D₁₀ₘ of at the most about 8.

21. A composition according to any of the preceding claims wherein at least a part of said particles of said magnetic or magnetizable particulate material are substantially spherical.

22. A composition according to any of the preceding claims wherein at least a part of said particles of said magnetic or magnetizable particulate material are in the form of fibres having a ratio between length and diameter in the range of 3-10, or in the range of 10-20, or in the range of 20-50, or in the range of 50-100.

23. A composition according to claim 22 wherein substantially all of said particles of said magnetic or magnetizable particulate material are in the form of fibres, and said volume C is in the range of (0.10-0.20) x (volume A + volume B + volume C), or
in the range of (0.20-0.40) x (volume A + volume B + volume C), or
more than 0.40 x (volume A + volume B + volume C).

24. A composition according to any of the preceding claims wherein said particles of said magnetic or magnetizable particulate material comprise material with soft magnetic properties selected from the group consisting of high-purity iron; commercial-purity iron; Armature M-43; Electric M-36; Dyname M-22; Transformer 58, M-15; oriented cube-on-edge texture, M-4; High-permeability G.O.; low-aluminium iron (3.5%); 16% Al-Fe; Sendust; Thermoperm; 45 Permalloy; 50-50 Ni-Fe; Mumetal; 78 Permalloy; Supermalloy; 27% Co-Fe; 50% Co-Fe; Supermendur; 45-25 Perminvar; 2-81 Moly permalloy powder; carbonyl iron powder; Mn-Zn Ferrite; Ni-Zn Ferrite; and amorphous Fe-B-Sl, METGLAS 2605S-2.

25. A composition according to any of the preceding claims wherein said particles of said magnetic or magnetizable particulate material comprise material with permanent magnetic properties selected from the group consisting of Ba ferrite; Sr ferrite; Alnico 5; Alnico 8; Alnico 9; Fe₆₅Cr₃₂Co₃; Fe₆₃Cr₂₅Co₁₂; Co₅Sm; (Co, Fe, Cu, Zr)₈Sm; elongated single domain (ESD) Fe-Co; Mn-Al-C; Co-Pt; and Fe-Nd-B.

26. A method of producing a body having magnetic properties or being magnetizable comprising the following steps:
providing a volume D of a castable and curable cement-based powder composition comprising:
i) particles of a magnetic or magnetizable particulate material, and
ii) a subcomposition including:
cement particles,
ultrafine particles of an inorganic material, said ultrafine particles having an average particle size in the range of 0.002-2 µm, and
a surface-active dispersing agent in an amount of 0.1-4% by weight dispersing agent dry matter based on the total weight of said cement particles and said ultrafine particles,
said ultrafine particles constituting 3-30% by volume of said powder composition,
said cement particles constituting 2-70% by volume of said powder composition,
said particles of said magnetic or magnetizable particulate material constituting 10-95%, preferably 30-95% by volume of said powder composition, and
said particles of said subcomposition having an average particle size of at the most 10 µm,
providing a volume E of water, said volume D of said castable and curable cement-based powder composition and said volume E of water fulfilling the requirement that the ratio between the weight of said volume E and the weight of said cement particles and said ultrafine particles in said volume D is at the most 0.35,
mechanically mixing said particles of said magnetic or magnetizable particulate material, said subcomposition and said water so as to obtain a homogeneous, viscous to plastic mass in which the volume concentration of said particles of said magnetic or magnetizable particulate material, said cement particles and said ultrafine particles is not less than 0.55,
arranging said mass in a mould, and
allowing said mass to solidify to at least such an extent that said solidified mass constituting said body may be removed from said mould.

27. A method according to claim 26 wherein the ratio between the weight of said volume E and the weight of said cement particles and said ultrafine particles in said volume D is at the most 0.30, preferably at the most 0.25, more preferably at the most 0.20.

28. A method according to claim 26 or 27, said castable and curable cement-based powder composition further having any of the characteristics of the castable and curable cement-based powder composition according to any of claims 1-25.

29. A body having magnetic properties or being magnetizable, and being cast from a castable and curable cement-based powder composition comprising:
i) particles of a magnetic or magnetizable particulate material, and
ii) a subcomposition including:
cement particles,
ultrafine particles of an inorganic material, said ultrafine particles having an average particle size in the range of 0.002-2 µm, and
a surface-active dispersing agent in an amount of 0.1-4% by weight dispersing agent dry matter based on the total weight of said cement particles and said ultrafine particles,
said ultrafine particles constituting 3-30% by volume of said powder composition and of said body,
said cement particles constituting 2-70% by volume of said powder composition and of said body,
said particles of said magnetic or magnetizable particulate material constituting 10-95%, preferably 30-95% by volume of said powder composition and of said body,
said particles of said subcomposition having an average particle size of at the most 10 µm, and
the volume concentration of said particles of said magnetic or magnetizable particulate material, said cement particles and said ultrafine particles being no less than 0.55 throughout said body.

30. A body according to claim 29, said body constituting a component of an electric apparatus, an electric machine, or an electric system or constituting the electric apparatus, the electric machine or electric system per se.

31. A body according to claim 29 or 30, said body constituting an armature of a solenoid inductor or transformer.

32. A body according to claim 29 or 30, said body constituting a stationary or movable component of an electric machine, such as a rotor or stator component of an electric AC or DC motor, or an electric generator, e.g. of an asynchronous or synchronous motor.

33. A body according to any of claims 29-32, said castable and curable cement-based powder composition further having any of the characteristics of the castable and curable cement-based powder composition according to any of claims 1-25.

34. A body according to any of claims 29-32 or 34, said body being manufactured by a method having any of the characteristics of the methods according to any of claims 26-28.

35. A method of producing a body having magnetic properties or being magnetizable comprising the following steps:
providing a plurality of bodies of a magnetic or magnetizable material,
providing a volume D of a castable and curable cement-based powder composition comprising:
cement particles,
optionally, ultrafine particles of an inorganic material, said ultrafine particles having an average particle size in the range of 0.002-2 µm,
a surface-active dispersing agent in an amount of 0.1-4% by weight dispersing agent dry matter based on the total weight of said cement particles and said ultrafine particles,
said magnetic or magnetizable material constituting 10-95% by volume of the total volume of said magnetic or magnetizable material and said powder composition, and
said cement particles of said powder composition having an average particle size of at the most 10 µm,
providing a volume E of water, said volume D of said castable and curable cement-based powder composition and said volume E of water fulfilling the requirement that the ratio between the weight of said volume E and the weight of said cement particles in said volume D is at the most 0.35,
mechanically mixing said powder composition and said water so as to obtain a homogeneous, viscous to plastic mass in which the volume concentration of said cement particles is not less than 0.55,
arranging said mass between and optionally around said bodies of said magnetic or magnetizable material so as to glue said bodies together by means of said mass, and
allowing said mass to solidify.

36. A method according to claim 35 wherein said cement-based powder composition comprises ultrafine particles of an inorganic material, said ultrafine particles having an average particle size in the range of 0.002-2 µm.

37. A method according to claim 35 or 36, said cement particles having an average size between 2 and 7 µm, preferably an average size between 2 and 5 µm, e.g. an average size between 2 and 3 µm.

38. A method according to any of claims 35-37 wherein the ratio between the weight of said volume E and the weight of said cement particles and said optional ultrafine particles in said volume D is at the most 0.30, preferably at the most 0.25, more preferably at the most 0.20.

39. A method according to any of claims 35-38, said castable and curable cement-based powder composition further having any of the characteristics of the subcomposition of the castable and curable cement-based powder composition according to any of claims 1-25.

40. A body having magnetic properties or being magnetizable, and including bodies of a magnetic or magnetizable material, which bodies are glued together by means of a solidified mass made from a castable and curable cement-based powder composition including:
cement particles,
optionally, ultrafine particles of an inorganic material, said ultrafine particles having an average particle size in the range of 0.002-2 µm,
a surface-active dispersing agent in an amount of 0.1-4% by weight dispersing agent dry matter based on the total weight of said cement particles and said ultrafine particles,
said magnetic or magnetizable material constituting 10-95% by volume of the total volume of said magnetic or magnetizable material and said powder composition,
said cement particles of said subcomposition having an average particle size of at the most 10 µm, and
the volume concentration of said cement particles being no less than 0.55 throughout said solidified mass.

41. A body according to claim 40 wherein said cement-based powder composition comprises ultrafine particles of an inorganic material, said ultrafine particles having an average particle size in the range of 0.002-2 µm.

42. A body according to claim 40 or 41, said body constituting a component of an electric apparatus, an electric machine, or an electric system or constituting the electric apparatus, the electric machine or electric system per se.

43. A body according to any of claims 40-42, said body constituting an armature of a solenoid inductor or transformer.

44. A body according to any of claims 40-42, said body constituting a stationary or movable component of an electric machine, such as a rotor or stator component of an electric AC or DC motor, an electric generator, e.g. of an asynchronous or synchronous motor.

45. A body according to any of claims 40-44, said castable and curable cement-based powder composition further having any of the characteristics of the subcomposition of the castable and curable cement-based powder composition according to any of claims 1-25.

46. A body according to any of claims 40-45, said body being manufactured by a method having any of the characteristics of the methods according to any of claims 35-39.

## Patentansprüche

1. Gießbare und aushärtbare, auf Zement basierende Pulverzusammensetzung, die aufweist:
i) Partikel eines magnetischen oder magnetisierbaren, partikelförmigen Materials, und
ii) eine Unterzusammensetzung, die umfaßt:
Zement-Partikel,
ultrafeine Partikel eines anorganischen Materials, wobei die ultrafeinen Partikel eine Durchschnittspartikelgröße im Bereich von 0,002-2 µm besitzen, und
ein oberflächenaktives, dispergierendes Mittel in einer Menge von 0,1-4% bezogen auf das Gewicht des dispergierenden Mittels basierend auf dem Gesamtgewicht der Zement-Partikel und der ultrafeinen Partikel,
wobei die ultrafeinen Partikel 3-30% bezogen auf das Volumen der Pulverzusammensetzung bilden,
wobei die Zement-Partikel 2-70% bezogen auf das Volumen der Pulverzusammensetzung bilden,
wobei die Partikel des magnetischen oder magnetisierbaren, partikelförmigen Materials 10-95% bezogen auf das Volumen, vorzugsweise 30-95% bezogen auf das Volumen, der Pulverzusammensetzung bilden, und
wobei die Partikel der Unterzusammensetzung eine Durchschnittspartikelgröße von höchstens 10 µm besitzen.

2. Zusammensetzung nach Anspruch 1, die weiterhin anorganische, feste Partikel aufweist, die ein partikelförmiges, inaktives Füllermaterial bilden, wobei die anorganischen, festen Partikel eine Durchschnittsgröße in dem Bereich von 3-100 µm besitzen.

3. Zusammensetzung nach Anspruch 1 oder 2, wobei mindestens 90% bezogen auf das Volumen der Partikel des magnetischen oder magnetisierbaren, partikelförmigen Materials eine Größe zwischen 1 µm und 200 µm, vorzugsweise eine Größe zwischen 1 µm und 150 µm, und noch bevorzugter eine Größe zwischen 1 µm und 100 µm besitzen.

4. Zusammensetzung nach einem der Ansprüche 1-3, wobei die Zement-Partikel eine Durchschnittsgröße zwischen 2 und 20 µm, vorzugsweise eine Durchschnittsgröße zwischen 2 und 10 µm, noch bevorzugter eine Durchschnittsgröße zwischen 2 und 7 µm, und am bevorzugtesten eine Durchschnittsgröße zwischen 2 und 5 µm, z.B. eine Durchschnittsgröße zwischen 2 und 3 µm, besitzen.

5. Zusammensetzung nach einem der Ansprüche 1-4, wobei die ultrafeinen Partikel eine Durchschnittsgröße zwischen 0,03 und 1 µm, vorzugsweise eine Durchschnittsgröße zwischen 0,1 und 0,5 µm, besitzen.

6. Zusammensetzung nach einem der vorhergehenden Ansprüche, wobei die Zement-Partikel ein Volumen B der Zusammensetzung festlegen, die Partikel eines magnetischen oder magnetisierbaren, partikelförmigen Materials ein Volumen C der Zusammensetzung festlegen, und das Volumen B höchstens 0,5 x (Volumen B + Volumen C) beträgt.

7. Zusammensetzung nach Anspruch 6, wobei das Volumen B in dem Bereich von 0,45 x (Volumen B + Volumen C) bis 0,30 x (Volumen B + Volumen C), oder in dem Bereich von 0,30 x (Volumen B + Volumen C) bis 0,25 x (Volumen B + Volumen C), oder
in dem Bereich von (0,25-0,20) x (Volumen B + Volumen C), oder
in dem Bereich von (0,20-0,15) x (Volumen B + Volumen C), oder
in dem Bereich von (0,15-0,10) x (Volumen B + Volumen C), oder
in dem Bereich von (0,10-0,05) x (Volumen B + Volumen C), oder
in dem Bereich von (0,05-0,02) x (Volumen B + Volumen C), oder
in dem Bereich von (0,02-0,002) x (Volumen B + Volumen C) liegt.

8. Zusammensetzung nach Anspruch 6 oder 7, wobei die ultrafeinen Partikel, die ein Volumen A der Zusammensetzung festlegen, und das Volumen B
in dem Bereich von (0,30-0,40) x (Volumen A + Volumen B + Volumen C), oder
in dem Bereich von (0,20-0,30) x (Volumen A + Volumen B + Volumen C), oder
in dem Bereich von (0,15-0,20) x (Volumen A + Volumen B + Volumen C), oder
in dem Bereich von (0,05-0,10) x (Volumen A + Volumen B + Volumen C), oder
in dem Bereich von (0,01-0,005) x (Volumen A + Volumen B + Volumen C), liegen.

9. Zusammensetzung nach einem der Ansprüche 6-8, wobei die Summe des Volumens B und die Summe des Volumens C mindestens 0,425, vorzugsweise mindestens 0,45, bevorzugter mindestens 0,475, bevorzugter mindestens 0,500, bevorzugter mindestens 0,525, bevorzugter mindestens 0,550, bevorzugter mindestens 0,575, bevorzugter mindestens 0,600, bevorzugter mindestens 0,626, bevorzugter mindestens 0,650, des gesamten Volumens der Zusammensetzung bilden.

10. Zusammensetzung nach einem der vorhergehenden Ansprüche, wobei die Zement-Partikel aus der Gruppe ausgewählt werden, die aus normalem Portland-Zement, Portland-Zement mit hoher, früher Festigkeit, weißem Portland-Zement, Portland-Hochofen-Zement, Portland-Puzzolanzement, niedrigalkalischem Zement, Flugaschenzement, sulfatbestän-digem Zement und Aluminiumoxid-Zement besteht.

11. Zusammensetzung nach einem der vorhergehenden Ansprüche, wobei die ultrafeinen Partikel aus der Gruppe ausgewählt werden, die aus Aluminiumoxid, Kalziumcarbonat, Kalziumhydroxid, Reisschotenasche, Metakaolin, SiO₂, TiO₂, ZrO₂ und gemahlener und/oder gesiebter Flugasche, Quarz und Schlacke gebildet ist.

12. Zusammensetzung gemäß Anspruch 11, wobei die ultrafeinen Partikel Mikrosiliziumoxid aus der Herstellung von Eisensilizium oder Siliziummetall aufweisen.

13. Zusammensetzung nach einem der vorhergehenden Ansprüche, wobei die anorganischen, festen Partikel, die das partikelförmige, inaktive Füllermaterial bilden, aus der Gruppe ausgewählt werden, die aus Flugasche, feinem Quarzsand, Schlacke, Aluminiuoxid, Kalziumcarbonat und Kalziumcarbonat enthaltenden Mineralien, Metakaolin, Al₂O₃, SiO₂, TiO₂, ZrO₂ und Bauxit einer feuerfesten Güte gebildet wird.

14. Zusammensetzung nach einem der vorhergehenden Ansprüche, wobei das oberflächenaktive, dispergierende Mittel ein Beton-Superplastifizierer in einer Menge von 1-4% bezogen auf das Gewicht eines Superplastifizierer-Trockenmassen-Mittels basierend auf dem Gesamtgewicht der Zement-Partikel und der ultrafeinen Partikel ist.

15. Zusammensetzung nach einem der vorhergehenden Ansprüche, wobei die Zement-Partikel eine enge Partikelgrößenverteilung besitzen, wie dies durch ein Verhältnis D₉₀/D₁₀, das höchstens 12 beträgt, festgelegt ist, wobei D₉₀ der Durchmesser des 90sten Percentils (bezogen auf das Gewicht) der Zement-Partikel ist und D₁₀ der Durchmesser des 10ten Percentils (bezogen auf das Gewicht) der Zement-Partikel ist.

16. Zusammensetzung nach einem der vorhergehenden Ansprüche, wobei die Partikel des magnetischen oder magnetisierbaren, partikelförmigen Materials eine Durchschnittspartikelgröße in dem Bereich von 50-100 µm besitzen.

17. Zusammensetzung nach einem der Ansprüche 1-15, wobei die Partikel des magnetischen oder magnetisierbaren, partikelförmigen Materials eine Durchschnittspartikelgröße in dem Bereich von 2-50 µm besitzen.

18. Zusammensetzung nach einem der vorhergehenden Ansprüche, wobei die Partikel des magnetischen oder magnetisierbaren, partikelförmigen Materials eine enge Partikelgrößenverteilung besitzen, wie sie durch ein Verhältnis D₉₀ₘ/D₁₀ₘ festgelegt ist, das höchstens 10, vorzugsweise 6, beträgt, wobei D₉₀ₘ der Durchmesser des 90sten Percentils (bezogen auf das Gewicht) der Partikel des magnetischen oder magnetisierbaren, partikelförmigen Materials ist und D₁₀ₘ der Durchmesser des 10ten Percentils (bezogen auf das Gewicht) der Partikel des magnetischen oder magnetisierbaren, partikelförmigen Materials ist.

19. Zusammensetzung nach einem der Ansprüche 1-15, wobei die Partikel des magnetischen oder magnetisierbaren, partikelförmigen Materials zwei Fraktionen aufweisen, wobei eine Fraktion eine Durchschnittsgröße in dem Bereich von 50-100 µm besitzt, die eine andere Fraktion einer Durchschnittsgröße in dem Bereich von 2-10 µm besitzt.

20. Zusammensetzung nach Anspruch 19, wobei mindestens eine der Fraktionen eine enge Partikelgrößenverteilung besitzt, wie sie durch die Fraktion definiert ist, die eine Durchschnittsgröße in dem Bereich von 50-100 µm besitzt, ein Verhältnis D₉₀ₘ/D₁₀ₘ besitzt, derart, daß es höchstens 4 beträgt, und/oder die Fraktion, die eine Durchschnittsgröße in dem Bereich von 2-10 µm besitzt, ein Verhältnis D₉₀ₘ/D₁₀ₘ von höchstens etwa 8 besitzt.

21. Zusammensetzung nach einem der vorhergehenden Ansprüche, wobei mindestens ein Teil der Partikel des magnetischen oder magnetisierbaren, partikelförmigen Materials im wesentlichen sphärisch ist.

22. Zusammensetzung nach einem der vorhergehenden Ansprüche, wobei mindestens ein Teil der Partikel des magnetischen oder magnetisierbaren, partikelförmigen Materials in der Form von Fasern vorliegt, die ein Verhältnis zwischen Länge und Durchmesser in dem Bereich von 3-10, oder in dem Bereich von 10-20, oder in dem Bereich von 20-50, oder in dem Bereich von 50-100 besitzen.

23. Zusammensetzung nach Anspruch 22, wobei im wesentlichen alle der Partikel des magnetischen oder magnetisierbaren, partikelförmigen Materials in der Form von Fasern vorliegen und das Volumen C
in dem Bereich von (0,10-0,20) x (Volumen A + Volumen B + Volumen C), oder
in dem Bereich von (0,20-0,40) x (Volumen A + Volumen B + Volumen C), oder
mehr als 0,40 x (Volumen A + Volumen B + Volumen C) beträgt.

24. Zusammensetzung nach einem der vorhergehenden Ansprüche, wobei die Partikel des magnetischen oder magnetisierbaren, partikelförmigen Materials Materialien mit weichmagnetischen Eigenschaften aufweist, das aus der Gruppe ausgewählt ist, die hochreines Eisen; kommerziell reines Eisen; Armature M-43; Electric M-36; Dyname M-22; Transformer 58, M-15; würfelkantenförmig orientierte Gefüge, M-4; hochpermeables G.O.; niedrig aluminiumlegiertes Eisen (3,5%); 16% Al-Fe; Sendust; Thermoperm, 45 Permalloy; 50-50 Ni-Fe; Mumetal; 78 Permalloy; Supermalloy; 27% Co-Fe; 50% Co-Fe; Supermendur; 45-25 Perminvar; 2-81 Moly Permalloy-Pulver; Carbonyl-Eisen-Pulver; Mn-Zn-Ferrit; Ni-Zn-Ferrit; und amorphes Fe-B-S1 ; METGLAS 2605S-2, umfaßt.

25. Zusammensetzung nach einem der vorhergehenden Ansprüche, wobei die Partikel des magnetischen oder magnetisierbaren, partikelförmigen Materials Material mit permanentmagnetischen Eigenschaften besitzen, die aus der Gruppe ausgewählt sind, die aus Ba-Ferrit; Sr-Ferrit; Alnico 5; Alnico 8; Alnico 9; Fe₆₅Cr₃₂Co₃; Fe₆₃Cr₂₅Co₁₂; Co₅Sm; (Co, Fe, Cu, Zr)₈Sm; Elongated Single Domain (ESD) -Fe-Co; Mn-Al-C; Co-Pt; und Fe-Nd-B besteht.

26. Verfahren zur Herstellung eines Körpers, der magnetische Eigenschaften besitzt oder magnetisierbar ist, der die folgenden Verfahrensschritte umfaßt:
Bildung eines Volumens D einer gießbaren und aushärtbaren, auf Zement basierenden Pulverzusammensetzung, die aufweist:
i) Partikel eines magnetischen oder magnetisierbaren, partikelförmigen Materials, und
ii) eine Unterzusammensetzung, die umfaßt:
Zement-Partikel,
ultrafeine Partikel eines anorganischen Materials, wobei die ultrafeinen Partikel eine Durchschnittspartikelgröße im Bereich von 0,002-2 µm besitzen, und
ein oberflächenaktives, dispergierendes Mittel in einer Menge von 0,1-4% bezogen auf das Gewicht des dispergierenden Trockenmassen-Mittels basierend auf dem Gesamtgewicht der Zement-Partikel und der ultrafeinen Partikel,
wobei die ultrafeinen Partikel 3-30% bezogen auf das Volumen der Pulverzusammensetzung bilden,
wobei die Zement-Partikel 2-70% bezogen auf das Volumen der Pulverzusammensetzung bilden,
wobei die Partikel des magnetischen oder magnetisierbaren, partikelförmigen Materials 10-95%, vorzugsweise 30-95%, bezogen auf das Volumen der Pulverzusammensetzung und des Körpers bilden, und
wobei die Partikel der Unterzusammensetzung eine Durchschnittspartikelgröße von höchstens 10 µm besitzen,
Bildung eines Volumens E aus Wasser, wobei das Volumen D der gießbaren und aushärtbaren, auf Zement basierenden Pulverzusammensetzung und das Volumen E des Wassers das Erfordernis erfüllt, daß das Verhältnis zwischen dem Gewicht des Volumens E und dem Gewicht der Zement-Partikel und der ultrafeinen Partikel in dem Volumen D höchstens 0,35 beträgt,
mechanisches Mischen der Partikel des magnetischen oder magnetisierbaren, partikelförmigen Materials, der Unterzusammensetzung und des Wassers so, um eine homogene, viskose bis plastische Masse zu erhalten, in der die Volumenkonzentration der Partikel des magnetischen oder magnetisierbaren, partikelförmigen Materials, der Zement-Partikel und der ultrafeinen Partikel nicht geringer als 0,55 ist,
Anordnung der Masse in einer Gießform, und
Ermöglichen, daß sich die Masse mindestens in einem solchen Maß verfestigt, daß die verfestigte Masse, die den Körper bildet, aus der Gießform entfernt werden kann.

27. Verfahren nach Anspruch 26, wobei das Verhältnis zwischen dem Gewicht des Volumens E und dem Gewicht der Zement-Partikel und den ultrafeinen Partikeln in dem Volumen D höchsten 0,30, vorzugsweise höchstens 0,25, bevorzugter höchstens 0,20, beträgt.

28. Verfahren nach Anspruch 26 oder 27, wobei die gießbare und aushärtbare, auf Zement basierende Pulverzusammensetzung weiterhin irgendeine der Charakteristiken der gießbaren und aushärtbaren, auf Zement basierenden Pulverzusammensetzung gemäß einem der Ansprüche 1-25 besitzt.

29. Körper, der magnetische Eigenschaften besitzt oder magnetisierbar ist und der aus einer gießbaren und aushärtbaren, auf Zement basierenden Pulverzusammensetzung gegossen ist, die aufweist:
i) Partikel eines magnetischen oder magnetisierbaren, partikelförmigen Materials, und
ii) eine Unterzusammensetzung, die umfaßt:
Zement-Partikel,
ultrafeine Partikel eines anorganischen Materials, wobei die ultrafeinen Partikel eine Durchschnittspartikelgröße im Bereich von 0,002-2 µm besitzen, und
ein oberflächenaktives, dispergierendes Mittel in einer Menge von 0,1-4% bezogen auf das Gewicht des dispergierenden Trockenmassen-Mittels basierend auf dem Gesamtgewicht der Zement-Partikel und der ultrafeinen Partikel,
wobei die ultrafeinen Partikel 3-30% bezogen auf das Volumen der Pulverzusammensetzung und des Körpers bilden,
wobei die Zement-Partikel 2-70% bezogen auf das Volumen der Pulverzusammensetzung und des Körpers bilden,
wobei die Partikel des magnetischen oder magnetisierbaren, partikelförmigen Materials 10-95%, vorzugsweise 30-95% bezogen auf das Volumen der Pulverzusammensetzung und des Körpers bilden, und
wobei die Partikel der Unterzusammensetzung eine Durchschnittspartikelgröße von höchstens 10 µm besitzen, und
die Volumenkonzentration der Partikel des magnetischen oder magneti sierbaren, partikelförmigen Materials, der Zement-Partikel und der ultrafeinen Partikel nicht geringer als 0,55 durch den Körper hindurch ist.

30. Körper nach Anspruch 29, wobei der Körper eine Komponente eines elektrischen Geräts, einer elektrischen Maschine oder eines elektrischen Systems bildet oder das elektrische Gerät, die elektrische Maschine oder das elektrische System per se bildet.

31. Körper nach Anspruch 29 oder 30, wobei der Körper einen Anker eines Solenoid-Induktors oder -Transformators bildet.

32. Körper nach Anspruch 29 oder 30, wobei der Körper eine stationäre oder bewegbare Komponente einer elektrischen Maschine, wie beispielsweise eine Rotor- oder Stator-Komponente eines elektrischen AC- oder DC-Motors oder eines elektrischen Generators, z.B. einen Asynchron- oder Synchron-Motor, bildet.

33. Körper nach einem der Ansprüche 29-32, wobei die gießbare und aushärtbare, auf Zement basierende Pulverzusammensetzung weiterhin irgendeines der Kennzeichen der gießbaren und aushärtbaren, auf Zement basierenden Pulverzusammensetzung gemäß einem der Ansprüche 1-25 besitzt.

34. Körper nach einem der Ansprüche 29-32 oder 34, wobei der Körper mittels eines Verfahrens hergestellt ist, das irgendeines der Kennzeichen des Verfahrens gemäß einem der Ansprüche 26-28 besitzt.

35. Verfahren zur Herstellung eines Körpers, der magnetische Eigenschaften besitzt oder magnetisierbar ist, das die nachfolgenden Verfahrensschritte aufweist:
Bereitstellung einer Vielzahl von Körpern aus magnetischem oder magnetisierbarem Material,
Bildung eines Volumens D einer gießbaren und aushärtbaren, auf Zement basierenden Pulverzusammensetzung, die aufweist:
Zement-Partikel,
optional ultrafeine Partikel eines anorganischen Materials, wobei die ultrafeinen Partikel eine Durchschnittspartikelgröße im Bereich von 0,002-2 µm aufweisen,
ein oberflächenaktives, dispergierendes Mittel in einer Menge von 0,1-4% bezogen auf das Gewicht des dispergierenden Trockengrundmassen-Mittels, und zwar basierend auf dem Gesamtgewicht der Zement-Partikel und der ultrafeinen Partikel,
wobei das magnetische oder magnetisierbare Material 10-95% bezogen auf das Volumen des Gesamtvolumens des magnetischen oder magnetisierbaren Materials und der Pulverzusammensetzung beträgt, und
wobei die Zement-Partikel der Pulverzusammensetzung eine Durchschnittspartikelgröße von höchstens 10 µm besitzen,
Bildung eines Volumens E aus Wasser, wobei das Volumen D der gießbaren und aushärtbaren, auf Zement basierenden Pulverzusammensetzung und das Volumen E des Wassers das Erfordernis erfüllen, daß das Verhältnis zwischen dem Gewicht des Volumens E und des Gewichts der Zement-Partikel in dem Volumen D höchstens 0,35 beträgt,
mechanisches Mischen der Pulverzusammensetzung und des Wassers so, um eine homogene, viskose bis plastische Masse zu erhalten, in der die Volumenkonzentration der Zement-Partikel nicht geringer als 0,55 beträgt,
Anordnung der Masse zwischen und optional um die Körper des magnetischen oder magnetisierbaren Materials so, um die Körper mittels der Masse miteinander zu verkleben, und
Ermöglichen, daß sich die Masse verfestigt.

36. Verfahren nach Anspruch 35, wobei die auf Zement basierende Pulverzusammensetzung ultrafeine Partikel eines anorganischen Materials aufweist, wobei die ultrafeinen Partikel eine Durchschnittspartikelgröße in dem Bereich von 0,002-2 µm besitzen.

37. Verfahren nach Anspruch 35 oder 36, wobei die Zement-Partikel eine Durchschnittsgröße zwischen 2 und 7 µm, vorzugsweise eine Durchschnittsgröße zwischen 2 und 5 µm, z.B. eine Durchschnittsgröße zwischen 2 und 3 µm besitzen.

38. Verfahren nach einem der Ansprüche 35-37, wobei das Verhältnis zwischen dem Gewicht des Volumens E und dem Gewicht der Zement-Partikel und der optionalen, ultrafeinen Partikel in dem Volumen D 0,30, vorzugsweise höchstens 0,25, bevorzugter höchstens 0,20, beträgt.

39. Verfahren nach einem der Ansprüche 35-38, wobei die gießbare und aushärtbare, auf Zement basierende Pulverzusammensetzung weiterhin irgendeines der Merkmale der Unterzusammensetzung der gießbaren und aushärtbaren, auf Zement basierenden Pulverzusammensetzung gemäß einem der Ansprüche 1-25 besitzt.

40. Körper, der magnetische Eigenschaften besitzt oder magnetisierbar ist und Körper eines magnetischen oder magnetisierbaren Materials aufweist, wobei Körper miteinander mittels einer verfestigten Masse verklebt werden, die aus einer gießbaren und
aushärtbaren, auf Zement basierenden Pulverzusammensetzung hergestellt ist, die umfaßt:
Zement-Partikel,
optional ultrafeine Partikel eines anorganischen Materials, wobei die ultrafeinen Partikel eine Durchschnittspartikelgröße im Bereich von 0,002-2 µm aufweisen,
ein oberflächenaktives, dispergierendes Mittel in einer Menge von 0,1-4% bezogen auf das Gewicht des dispergierenden Trockengrundmassen-Mittels, und zwar basierend auf dem Gesamtgewicht der Zement-Partikel und der ultrafeinen Partikel,
wobei das magnetische oder magnetisierbare Material 10-95% bezogen auf das Volumen des Gesamtvolumens des magnetischen oder magnetisierbaren Materials und der Pulverzusammensetzung beträgt,
wobei die Zement-Partikel der Unterzusammensetzung eine Durchschnittspartikelgröße von höchstens 10 µm besitzen, und
wobei die Volumenkonzentration der Partikel der Zement-Partikel nicht geringer als 0,55 durch die verfestigte Masse hindurch beträgt.

41. Körper nach Anspruch 40, wobei die auf Zement basierende Pulverzusammensetzung ultrafeine Partikel eines anorganischen Materials aufweist, wobei die ultrafeinen Partikel eine Durchschnittspartikelgröße in dem Bereich von 0,002-2 µm besitzen.

42. Körper nach Anspruch 40 oder 41, wobei der Körper eine Komponente eines elektrischen Geräts, einer elektrischen Maschine oder eines elektrischen Systems oder das elektrische Gerät, die elektrische Maschine oder das elektrische System per se bildet.

43. Körper nach einem der Ansprüche 40-42, wobei der Körper einen Anker eines Solenoid-Induktors oder-Transformators bildet.

44. Körper nach einem der Ansprüche 40-42, wobei der Körper eine stationäre oder bewegbare Komponente einer elektrischen Maschine, wie beispielsweise einer Rotor- oder Stator-Komponente eines elektrischen AG- oder DC-Motors, eines elektrischen Generators, z.B. eines Asynchron- oder Synchron-Motors, bildet.

45. Körper nach einem der Ansprüche 40-44, wobei die gießbare und aushärtbare, auf Zement basierende Pulverzusammensetzung weiterhin irgendeines der Kennzeichen der Unterzusammensetzung der gießbaren und aushärtbaren, auf Zement basierenden Pulverzusammensetzung gemäß einem der Ansprüche 1-25 besitzt.

46. Körper nach einem der Ansprüche 40-45, wobei der Körper durch ein Verfahren hergestellt ist, das eines der Kennzeichen des Verfahrens gemäß einem der Ansprüche 35-39 besitzt.

## Revendications

1. Composition de poudre à base de ciment pouvant être moulée et avoir prise comprenant :
i) des particules d'un matériau particulier magnétique ou magnétisable, et
ii) une sous-composition comprenant :
des particules de ciment,
des particules ultra-fines d'un matériau inorganique, lesdites particules ultra-fines ayant une dimension de particules moyenne comprise dans l'intervalle de 0,002 à 2 µm, et
un agent dispersant tensioactif dans une quantité de 0,1 à 4 % en poids d'agent dispersant sur la base du poids total desdites particules de ciment et desdites particules ultra-fines,
lesdites particules ultra-fines constituant 3 à 30 % en volume de ladite composition de poudre,
lesdites particules de ciment constituant 2 à 70 % en volume de ladite composition de poudre,
lesdites particules dudit matériau particulier magnétique ou magnétisable constituant 10 à 95 % en volume, de préférence 30 à 95 % en volume de ladite composition de poudre, et
lesdites particules de ladite sous-composition ayant une dimension de particules moyenne au plus de 10 µm.

2. Composition selon la revendication 1, comprenant en outre des particules solides inorganiques constituant un matériau de charge inactif particulier, lesdites particules solides inorganiques ayant une dimension de particules comprise dans l'intervalle de 3 à 100 µm.

3. Composition selon la revendication 1 ou 2, au moins 90 % en volume desdites particules dudit matériau particulier magnétique ou magnétisable ayant une dimension comprise entre 1 µm et 200 µm, de préférence une dimension comprise entre 1 µm et 150 µm, et plus préférablement une dimension comprise entre 1 µm et 100 µm.

4. Composition selon l'une quelconque des revendications 1 à 3, lesdites particules de ciment ayant une dimension moyenne comprise entre 2 et 20 µm, de préférence une dimension moyenne comprise entre 2 et 10 µm, plus préférablement une dimension moyenne comprise entre 2 et 7 µm, et le plus préférablement une dimension moyenne comprise entre 2 et 5 µm, par exemple une dimension moyenne comprise entre 2 et 3 µm.

5. Composition selon l'une quelconque des revendications 1 à 4, lesdites particules ultra-fines ayant une dimension moyenne comprise entre 0,03 et 1 µm, de préférence une dimension moyenne comprise entre 0,1 et 0,5 µm.

6. Composition selon l'une quelconque des revendications précédentes, lesdites particules de ciment définissant un volume B de ladite composition, lesdites particules d'un matériau particulier magnétique ou magnétisable définissant un volume C de ladite composition, et ledit volume B étant au plus 0,5 X (volume B + volume C).

7. Composition selon la revendication 6, ledit volume B étant compris dans l'intervalle de 0,45 x (volume B + volume C) à 0,30 x (volume B + volume C), ou
dans l'intervalle de 0,30 x (volume B + volume C) à 0,25 X (volume B + volume C), ou
dans l'intervalle de (0,25 à 0,20) x (volume B + volume C), ou
dans l'intervalle de (0,20 à 0,15) x (volume B + volume C), ou
dans l'intervalle de (0,15 à 0,10) x (volume B + volume C), ou
dans l'intervalle de (0,10 à 0,05) x (volume B + volume C), ou
dans l'intervalle de (0,05 à 0,02) x (volume B + volume C), ou
dans l'intervalle de (0,02 à 0,002) x (volume B + volume C).

8. Composition selon la revendication 6 ou 7, caractérisé en ce que lesdites particules ultra-fines définissant un volume A de ladite composition et ledit volume B étant
dans l'intervalle de (0,30 à 0,40) x (volume A + volume B + volume C), ou
dans l'intervalle de (0,20 à 0,30) x (volume A + volume B + volume C), ou
dans l'intervalle de (0,15 à 0,20) x (volume A + volume B + volume C), ou
dans l'intervalle de (0,05 à 0,10) x (volume A + volume B + volume C), ou
dans l'intervalle de (0,01 à 0,005) x (volume A + volume B + volume C).

9. Composition selon l'une quelconque des revendications précédentes 6 à 8, la somme dudit volume B et dudit volume C constituant au moins 0,425, préférablement au moins 0,45, plus préférablement au moins 0,475, plus préférablement au moins 0,500, plus préférablement au moins 0,525, plus préférablement au moins 0,550, plus préférablement au moins 0,575, plus préférablement au moins 0,600, plus préférablement au moins 0,626, plus préférablement au moins 0,650 du volume total de ladite composition.

10. Composition selon l'une quelconque des revendications précédentes, dans laquelle lesdites particules de ciment sont choisies à partir du groupe se composant du ciment Portland normal, du ciment Portland à résistance initiale élevée, du ciment Portland blanc, du ciment Portland de haut fourneau, du ciment Portland Pouzzolane, du ciment faiblement alcalin, du ciment de cendre volante, du ciment résistant au sulfate, et du ciment alumineux.

11. Composition selon l'une quelconque des revendications précédentes dans laquelle lesdites particules ultra-fines sont choisies à partir du groupe se composant d'alumine, de carbonate de calcium, d'hydroxyde de calcium, de cendre de cosse de riz, de métakaolin, de SiO₂, de Ti0₂, de ZrO₂, et de cendres volantes broyées et/ou tamisées, de quartz et de scories.

12. Composition selon la revendication 11, dans laquelle lesdites particules ultra-fines comprennent de la microsilice venant de la production de métal de ferrosilicium ou de silicium.

13. Composition selon l'une quelconque des revendications précédentes, dans laquelle lesdites particules solides inorganiques constituant ledit matériau de charge inactif particulier sont choisies à partir du groupe se composant de cendres volantes, de sable de quartz fin, de scories, d'alumine, de carbonate de calcium et de minéraux contenant du carbonate de calcium, de métakaolin, d'Al₂O₃, de SiO₂, de Ti0₂, de ZrO₂ et de bauxite de qualité réfractaire.

14. Composition selon l'une quelconque des revendications précédentes, dans laquelle ledit agent dispersant tensioactif est un superplastifiant de béton dans une quantité de 1 à 4 % en poids de matière sèche de superplastifiant sur la base du poids total desdites particules de ciment et desdites particules ultrafines.

15. Composition selon l'une quelconque des revendications précédentes dans laquelle lesdites particules de ciment ont une distribution de dimension de particules étroite telle que définie par un rapport D₉₀/D₁₀ étant au plus de 12, dans lequel D₉₀ est le diamètre du 90 ème percentile (en poids) desdites particules de ciment
et D₁₀ est le diamètre du 10 ème percentile (en poids) desdites particules de ciment.

16. Composition selon l'une quelconque des revendications précédentes dans laquelle lesdites particules dudit matériau de particules magnétiques ou magnétisables ont une dimension de particules moyenne comprise dans l'intervalle de 50 à 100 µm.

17. Composition selon l'une quelconque des revendications 1 à 15 dans laquelle lesdites particules dudit matériau particulier magnétique ou magnétisable ont une dimension de particules moyenne comprise dans l'intervalle de 2 à 50 µm.

18. Composition selon l'une quelconque des revendications précédentes dans laquelle lesdites particules dudit matériau particulier magnétique ou magnétisable ont une distribution de dimension de particules étroite telle que définie par un rapport D₉₀m/D₁₀m étant au plus de 10, de préférence au plus de 6, dans lequel D₉₀m est le diamètre du 90ème percentile (en poids) desdites particules dudit matériau particulier magnétique ou magnétisable et D₁₀m est le diamètre du 10eme percentile (en poids) desdites particules dudit matériau particulier magnétique ou magnétisable.

19. Composition selon l'une quelconque des revendications 1 à 15 dans laquelle lesdites particules dudit matériau particulier magnétique ou magnétisable comprend deux fractions, une fraction ayant une dimension moyenne comprise dans l'intervalle de 50 à 100 µm, l'autre fraction ayant une dimension moyenne comprise dans l'intervalle de 2 à 10 µm.

20. Composition selon la revendication 19 dans laquelle au moins une desdites fractions a une distribution de dimension de particules étroite, telle que définie par ladite fraction ayant une dimension moyenne comprise dans l'intervalle de 50 à 100 µm ayant un rapport D₉₀m/D₁₀m au plus de 4, et/ou ladite fraction ayant une dimension moyenne comprise dans l'intervalle de 2 à 10 µm ayant un rapport D₉₀m/D₁₀m au plus de 8 environ.

21. Composition selon l'une quelconque des revendications précédentes dans laquelle au moins une partie desdites particules dudit matériau particulier magnétique ou magnétisable sont essentiellement sphériques.

22. Composition selon l'une quelconque des revendications précédentes dans laquelle au moins une partie desdites particules dudit matériau particulier magnétique ou magnétisable sont sous la forme de fibres ayant un rapport compris entre la longueur et le diamètre compris dans l'intervalle de 3 à 10, ou dans l'intervalle de 10 à 20, ou dans l'intervalle de 20 à 50, ou dans l'intervalle de 50 à 100.

23. Composition selon la revendication 22, dans laquelle essentiellement toutes lesdites particules dudit matériau particulier magnétique ou magnétisable sont sous la forme de libres, et ledit volume C est compris dans l'intervalle de (0,10 à 0,20) x (volume A + volume B + volume C).
dans l'intervalle de (0,20 à 0,40) x (volume A + volume B + volume C), ou
supérieur à 0,40 x (volume A + volume B + volume C), ou

24. Composition selon l'une quelconque des revendications précédentes dans laquelle lesdites particules dudit matériau particulier magnétique ou magnétisable comprennent un matériau avec des propriétés magnétiques douces sélectionnées à partir du groupe se composant de : fer de pureté élevée ; fer de pureté commerciale ; Armature M-43 ; Electrique M-36 ; Dyname M-22 ; Transformateur 58, M-15 ; texture orientée de cube sur les arêtes, M-4 ; G.O. de perméabilité élevée; fer à faible teneur en aluminium (3,5 %) ; Al-Fe 16 %; Sendust ; Thermoperm ; Permalloy 45 ; Ni-Fe 50-50 ; Mumetal ; Permalloy 78; Supermalloy ; Co-Fe 27 %; Co-Fe 50 %; Supermendur ; Perminvar 45-25; Poudre Permalloy Moly 2-81 ; poudre de fer carbonyle ; Ferrite Mn-Zn ; Ferrite Ni-Zn ; et Fe-B-S1 amorphe, METGLAS 2605S-2.

25. Composition selon l'une quelconque des revendications précédentes dans laquelle lesdites particules dudit matériau particulier magnétique ou magnétisable comprend un matériau avec des propriétés magnétiques permanentes sélectionnées à partir du groupe se composant de : ferrite de Ba, ferrite de Sr ; Alnico 5 ; Alnico 8 ; Alnico 9 ; Fe₆₅Cr₃₂Co₃ ; Fe₆₃Cr₂₅Co₁₂ ; Co₅Sm ; (Co, Fe, Cu, Zr)₈Sm ; Fe-Co à domaine unique allongé (ESD); Mn-Al-C ; Co-Pt ; et Fe-Nd-B.

26. Procédé de production d'un corps ayant des propriétés magnétiques ou étant magnétisable comprenant les étapes suivantes :
fourniture d'un volume D d'une composition de poudre à base de ciment pouvant être moulée et avoir prise comprenant :
i) des particules d'un matériau particulier magnétique ou magnétisable, et
ii) une sous-composition comprenant :
des particules de ciment,
des particules ultra-fines d'un matériau inorganique, lesdites particules ultra-fines ayant une dimension de particules moyenne comprise dans l'intervalle de 0,002 à 2 µm, et
un agent dispersant tensioactif dans une quantité de 0,1 à 4 % en poids de matière sèche d'agent dispersant sur la base du poids total desdites particules de ciment et desdites particules ultrafines,
lesdites particules ultra-fines constituant 3 à 30 % en volume de ladite composition de poudre,
lesdites particules de ciment constituant 2 à 70 % en volume de ladite composition de poudre,
lesdites particules dudit matériau particulier magnétique ou magnétisable constituant 10 à 95 %, de préférence 30 à 95 % en volume de ladite composition de poudre, et
lesdites particules de ladite sous-composition ayant une dimension de particules moyenne au plus de 10 µm,
fourniture d'un volume E d'eau, ledit volume D de ladite composition de poudre à base de ciment pouvant être moulée et avoir prise et ledit volume E d'eau satisfaisant l'exigence par laquelle le rapport entre le poids dudit volume E et le poids desdites particules de ciment et desdites particules ultra-fines dans ledit volume D est au plus de 0,35,
mélange de façon mécanique desdites particules dudit matériau particulier magnétique ou magnétisable, de ladite sous-composition et de ladite eau afin d'obtenir une masse homogène, visqueuse à plastique dans laquelle la concentration en volume desdites particules dudit matériau particulier magnétique ou magnétisable, desdites particules de ciment et desdites particules ultra-fines n'est pas inférieure à 0,55,
disposition de ladite masse dans un moule, et
autorisation de ladite masse à se solidifier au moins jusqu'au point où ladite masse solidifiée constituant ledit corps peut être enlevée dudit moule.

27. Procédé selon la revendication 26 dans lequel le rapport entre le poids dudit volume E et le poids desdites particules de ciment et desdites particules ultra-fines dans le volume D est au plus de 0,30, de préférence au plus de 0,25, et plus préférablement au plus de 0,20.

28. Procédé selon la revendication 26 ou 27, ladite composition de poudre à base de ciment pouvant être moulée et avoir prise ayant une des caractéristiques de la composition de poudre à base de ciment pouvant être moulée et avoir prise selon l'une quelconque des revendications 1 à 25.

29. Corps ayant des propriétés magnétiques ou étant magnétisable, et étant moulé à partir d'une composition de poudre à base de ciment pouvant être moulée et avoir prise comprenant :
i) des particules d'un matériau particulier magnétique ou magnétisable, et
ii) une sous-composition comprenant :
des particules de ciment,
des particules ultra-fines d'un matériau inorganique, lesdites particules ultra-fines ayant une dimension de particules moyenne comprise dans l'intervalle de 0,002 à 2 µm, et
un agent dispersant tensioactif dans une quantité de 0,1 à 4 % en poids de matière sèche d'agent dispersant sur la base du poids total desdites particules de ciment et desdites particules ultra-fines,
lesdites particules ultra-fines constituant 3 à 30 % en volume de ladite composition de poudre et dudit corps,
lesdites particules de ciment constituant 2 à 70 % en volume de ladite composition de poudre et dudit corps,
lesdites particules dudit matériau particulier magnétique ou magnétisable constituant 10 à 95 %, de préférence 30 à 95 % en volume de ladite composition de poudre et dudit corps,
lesdites particules de ladite sous-composition ayant une dimension de particules moyenne au plus de 10 µm, et
la concentration en volume desdites particules dudit matériau particulier magnétique ou magnétisable desdites particules de ciment et desdites particules ultra-fines n'étant pas inférieures à 0,55 partout dans ledit corps.

30. Corps selon la revendication 29, dans lequel ledit corps constituant un composant d'un appareil électrique, une machine électrique ou un système électrique ou constituant l'appareil électrique, la machine électrique ou le système électrique, en soi.

31. Corps selon la revendication 29 ou 30, ledit corps constituant une armature d'un inducteur solénoïde ou d'un transformateur.

32. Corps selon la revendication 29 ou 30, ledit corps constituant un composant stationnaire ou mobile d'une machine électrique, tel qu'un composant de rotor ou de stator d'un moteur électrique alternatif ou continu, ou d'un générateur électrique, par exemple, d'un moteur asynchrone ou synchrone.

33. Corps selon l'une quelconque des revendications 29 à 32, ladite composition de poudre à base de ciment pouvant être moulée et avoir prise ayant en outre l'une quelconque des caractéristiques de la composition de poudre à base de ciment pouvant être moulée et avoir prise selon l'une quelconque des revendications 1 à 25.

34. Corps selon l'une quelconque des revendications 29 à 32 ou 34, ledit corps étant manufacturé par un procédé ayant l'une quelconque des caractéristiques des procédés selon l'une quelconque des revendications 26 à 28.

35. Procédé de production d'un corps ayant des propriétés magnétiques ou étant magnétisable comprenant les étapes suivantes :
fourniture d'une pluralité de corps d'un matériau magnétique ou magnétisable,
fourniture d'un volume D d'une composition de poudre à base de ciment pouvant être moulée et avoir prise comprenant :
des particules de ciment,
optionnellement, des particules ultra-fines d'un matériau inorganique, lesdites particules ultrafines ayant une dimension de particules moyenne comprise dans l'intervalle de 0,002 à 2 µm, et
un agent dispersant tensioactif dans une quantité de 0,1 à 4 % en poids de matière sèche d'agent dispersant sur la base du poids total desdites particules de ciment et desdites particules ultrafines,
ledit matériau particulier magnétique ou magnétisable constituant 10 à 95 % en volume, du volume total dudit matériau magnétique ou magnétisable et de ladite composition de poudre, et
lesdites particules de ciment de ladite composition de poudre ayant une dimension de particules moyenne au plus de 10 µm,
fourniture d'un volume E d'eau, ledit volume D de ladite composition de poudre à base de ciment pouvant être moulée et avoir prise et ledit volume E d'eau satisfaisant l'exigence par laquelle le rapport entre le poids dudit volume E et le poids desdites particules de ciment dans ledit volume D est au plus de 0,35,
mélange de façon mécanique de ladite composition de poudre et ladite eau afin d'obtenir une masse homogène, visqueuse à plastique dans laquelle la concentration en volume desdites particules de ciment n'est pas inférieure à 0,55,
disposition de ladite masse dans un moule, entre et optionnellement autour desdits corps dudit matériau magnétique ou magnétisable afin de coller lesdits corps ensemble au moyen de ladite masse, et
autorisation de ladite masse à se solidifier.

36. Procédé selon la revendication 35, dans lequel ladite composition de poudre à base de ciment comprend des particules ultra-fines d'un matériau inorganique, lesdites particules ultra-fines ayant une dimension de particules moyenne comprise dans l'intervalle de 0,002 à 2 µm.

37. Procédé selon la revendication 35 ou 36, lesdites particules de ciment ayant une dimension moyenne comprise entre 2 et 7 µm, de préférence une dimension moyenne comprise entre 2 et 5 µm, par exemple une dimension moyenne comprise entre 2 et 3 µm.

38. Procédé selon l'une quelconque des revendications 35 à 37 dans lequel ledit rapport entre le poids dudit volume E et le poids desdites particules de ciment et lesdites particules ultra-fines optionnelles dans ledit volume D est au plus de 0,30, de preférence au plus de 0,25, plus préférablement au plus de 0,20.

39. Procédé selon l'une quelconque des revendications 35 à 38, ladite composition de poudre à base de ciment pouvant être moulée et avoir prise ayant en outre une quelconque des caractéristiques de la sous-composition de la composition de poudre à base de ciment pouvant être moulée et avoir prise selon l'une quelconque des revendications 1 à 25.

40. Corps ayant des propriétés magnétiques ou étant magnétisable, et comprenant des corps d'un matériau magnétique ou magnétisable, lesquels corps sont collés ensemble au moyen d'une masse solidifiée fabriquée à partir d'une composition de poudre à base de ciment pouvant être moulée et avoir prise comprenant
des particules de ciment,
optionnellement des particules ultra-fines d'un matériau inorganique, lesdites particules ultra-fines ayant une dimension de particules moyenne comprise dans l'intervalle de 0,002 à 2 µm, et
un agent dispersant tensioactif dans une quantité de 0,1 à 4 % en poids de matière sèche d'agent dispersant sur la base du poids total desdites particules de ciment et lesdites particules ultra-fines,
lesdites particules dudit matériau particulier magnétique ou magnétisable constituant 10 à 95 % en volume, du volume total dudit matériau magnétique et magnétisable et de ladite composition de poudre,
lesdites particules de ladite sous-composition ayant une dimension de particules moyenne au plus de 10 µm, et
la concentration en volume desdites particules de ciment n'étant pas inférieure à 0,55 à travers ladite masse solidifiée.

41. Corps selon la revendication 40 dans lequel ladite composition de poudre à base de ciment comprend des particules ultra-fines d'un matériau inorganique, lesdites particules ultra-fines ayant une dimension de particules moyenne comprise dans l'intervalle de 0,002 à 2 µm.

42. Corps selon la revendication 40 ou 41, ledit corps constituant un composant d'un appareil électrique, d'une machine électrique, ou d'un système électrique ou constituant l'appareil électrique, la machine électrique, ou le système électrique en soi.

43. Corps selon l'une quelconque des revendications 40 à 42, ledit corps constituant une armature d'un inducteur de solénoïde ou d'un transformateur.

44. Corps selon l'une quelconque des revendications 40 à 42, ledit corps constituant un composant fixe ou mobile d'une machine électrique, tel qu'un composant de rotor ou de stator d'un moteur électrique continu ou alternatif, d'un générateur électrique, par exemple d'un moteur asynchrone ou synchrone.

45. Corps selon l'une quelconque des revendications 40 à 44, ladite composition de poudre à base de ciment pouvant être moulée et avoir prise ayant en plus une quelconque des caractéristiques de la sous-composition de la composition de poudre à base de ciment pouvant être moulée et avoir prise selon l'une quelconque des revendications 1 à 25.

46. Corps selon l'une quelconque des revendications 40 à 45, ledit corps étant fabriqué par un procédé ayant l'une quelconque des caractéristiques des procédés selon l'une quelconque des revendications 35 à 39.
